# EUROPEAN PATENT APPLICATION

(11) **EP 1 775 722 A1**
(43) Date of publication of application: **18.04.2007**
(21) Application number: 05766406.2
(22) Date of filing: 21.07.2005
(51) Int. Cl.: G11B 7/0045, G11B 7/125

(54) **OPTICAL DISC RECORDING PULSE CONTROL METHOD, AND CONTROL DEVICE AND OPTICAL DISC DEVICE EMPLOYED THEREIN**

(30) Priority: 22.07.2004 JP 2004213787
(71) Applicant: MATSUSHITA ELECTRIC INDUSTRIAL CO., LTD., Osaka 571-8501 (JP)
(72) Inventor: MIYASHITA, H. c/o Matsushita Electric Ind. Co. Ltd, Shiromi Chuo-ku Osaka-shi Osaka 540-6319 (JP); SHIHARA, T. c/o Matsushita Electric Ind. Co. Ltd, Shiromi Chuo-ku Osaka-shi Osaka 540-6319 (JP); HINO, Y. c/o Matsushita Electric Ind. Co. Ltd, Shiromi Chuo-ku Osaka-shi Osaka 540-6319 (JP)
(74) Representative: Ehlers, Jochen
(86) International application number: PCT/JP2005/013378
(87) International publication number: WO 2006/009204

(57) **Abstract**

There are problems that recording degradation happens, and an error occurs in reproduction unless appropriate recording pulse conditions are determined. A recording pulse controlling method according to the present invention is a recording pulse controlling method for adjusting recording pulses for recording information on a writable optical disc, which includes a mark length adjustment step and a mark position adjustment step. The mark length adjustment step is a step for adjusting a recording mark length adjustment parameter, and the recording mark length adjustment parameter is adjusted to have a value for forming a recording mark having a length closest to a predetermined recording mark length. The mark position adjustment step is a step for adjusting a recording mark position adjustment parameter after the mark length adjustment step, and the recording mark position adjustment parameter is adjusted to have a value for forming a recording mark at a position closest to a predetermined recording mark position.

## Description

### TECHNICAL FIELD

The present invention relates to an optical disc recording pulse controlling method, an optical disc recording pulse controlling device, and an optical disc apparatus, particularly to an optical disc recording pulse controlling method, an optical disc recording pulse controlling device, and an optical disc apparatus for adjusting a recording pulse for recording information on a writable optical disc.

### BACKGROUND ART

In a recording and reproduction apparatus for recording and reproducing original digital information on portable recording media, shapes of marks formed on the media may vary and quality of a reproduced signal may be different very largely depending upon differences among apparatuses or recording media even when a recording pulse having the same shape is used. In order to prevent reduction in reliability due to such a variance, a calibration operation is performed when a recording medium is removed or mounted, or the like. The calibration is a controlling operation such as setting properties of a reproduction system, optimizing a shape of a recording pulse or the like in order to secure a reliability of user data.

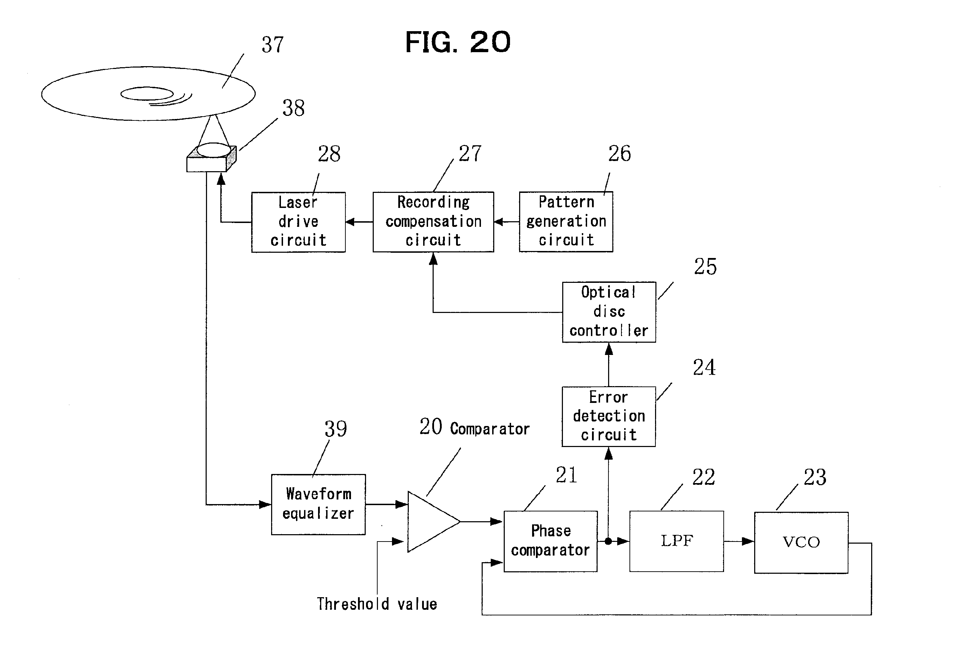

A general information reproduction apparatus employs a PLL circuit which extracts clock information included in a reproduction signal and discriminate original digital information based on the clock extracted from the reproduction signal. Figure 20 shows a structure of a conventional optical disc drive. Light reflected off an optical disc 37 is converted into a reproduction signal by an optical head 38. The reproduction signal has its waveform shaped by a waveform equalizer 39. The reproduction signal having the shaped waveform is digitalized at a comparator 20. Typically, a threshold value of the comparator 20 is feedback-controlled such that the result of integration of the digitalized output becomes zero. A phase comparator 21 obtains a phase error between the digitalized output and the reproduction clock. The obtained phase error is averaged by an LPF 22 and becomes a control voltage for a VCO 23. Feedback-control is performed such that the phase error output from the phase comparator 21 is always zero. In a recording medium for thermal recording, shapes of marks formed on a medium vary depending upon neighboring recording patterns because of heat interference on the medium. Thus, it is required to set optimal recording parameters for recording respective patterns.

Index for evaluating the recording parameters is the error detection output as mentioned above. The recording parameters are set such that the error detection output is minimum. Specifically, a recording compensation circuit 27 uses initially set recording parameters to change a recording pattern output from the pattern generation circuit 26 into a predetermined pulse waveform. A laser drive circuit 28 uses the pulse waveform and records information on an optical disc. Then, a predetermined recording pattern is reproduced from a track on which it has been recorded, and an error detection circuit 24 integrates an absolute value of a phase error between the output from the comparator 20 and the output of the VCO 23 to obtain a detection signal which has a correlation with jitter between the reproduction clock and the digitalized pulse edge. Then, recording is performed with the recording parameter being changed and reproduction is performed. This is repeated. The recording parameter with the smallest value being detected is the optimal recording parameter.

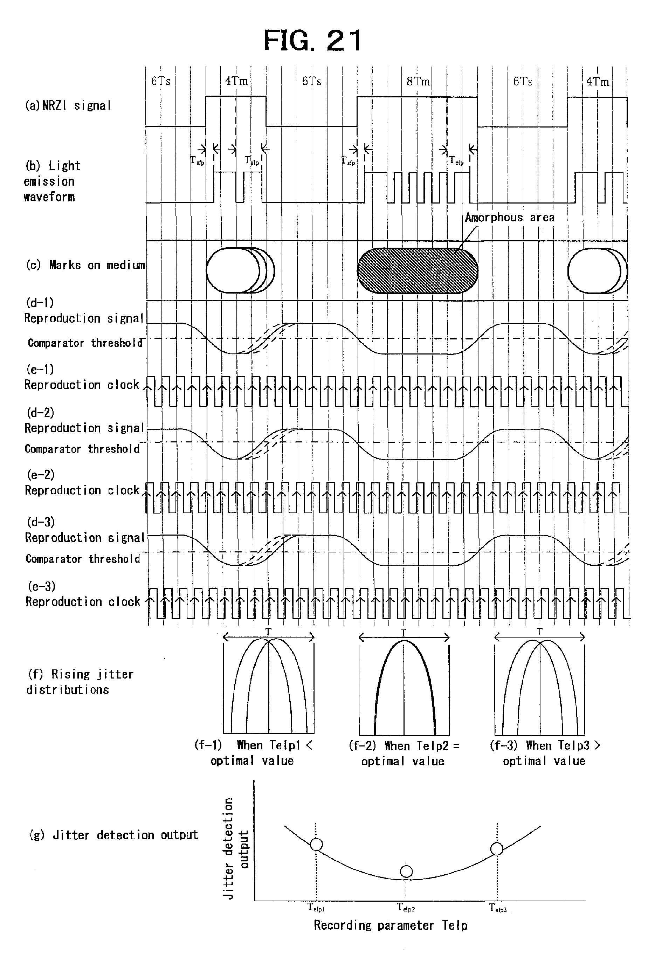

Figure 21 is a diagram showing a specific operation of the error detection circuit 24. An example will be described in which mark trailing end edges in a recording pattern of a 4T mark and a 6T space are optimized using a repeated recording pulse consisting of 6T, 4T, 6T, and 8T. In this example, a mark leading end edge between the 6T space and the 8T mark, and a trailing end edge between the 8T mark and the 6T space are already recorded with optimal recording parameters. When a periodical NRZI signal as shown in Figure 21(a) is received from the pattern generation circuit 26, a recording compensation circuit 27 generates a laser drive waveform as shown in Figure 21(b) for a general rewritable optical disc. Herein, Tsfp is a parameter for setting a mark leading end position, and Telp is a parameter for setting a mark trailing end position. The laser drive circuit 28 modulates a light emitting power as shown in Figure 21(b). As shown in Figure 21(c), emitted laser light forms a physically amorphous area on a track. When Telp which defines the trailing end position of the 4T mark is changed to Telp1, Telp2 and Telp3, the shape of the mark to be formed is changed as shown in Figure 21(c). Reproduction of such a track will be described below.

When the recording parameter at the 4T mark trailing end is Telp2, which is an optimal value, a reproduction signal represented by a solid line in Figure 21(d-1) is obtained. A threshold value is set such that the integration value of the comparator output is zero. A phase difference between the comparator output and the reproduction clock is detected, and the reproduction clock as shown in Figure 21(e-1) is generated such that an integration value of the phase error becomes zero.

Next, it will be described what happens when the recording parameter at the 4T mark trailing end is decreased from the optimal value to Telp1. In such a case, a reproduction signal as represented by a solid line in Figure 21(d-2) is obtained. Since the 4T mark trailing end edge moves along a time axis, a threshold value of the comparator becomes larger than the threshold value of Figure 21(d-1) as indicated by a chain line in Figure 21(d-2). The comparator output changes as the threshold value changes. Thus, a reproduction clock generated such that the integration value of the phase error becomes zero has a phase proceeded compared to the reproduction clock of Figure 21(e-1) as shown in Figure 21(e-2).

In contrast, it will be described what happens when the recording parameter at the 4T mark trailing end is increased from the optimal value to Telp3. In such a case, a reproduction signal as represented by a solid line in Figure 21(d-3) is obtained. Since the 4T mark trailing end edge moves along a time axis, a threshold value of the comparator becomes smaller than the threshold value of Figure 21(d-1) as indicated by a chain line in Figure 21(d-3). The comparator output changes as the threshold value changes. Thus, a reproduction clock generated such that the integration value of the phase error becomes zero has a phase delayed compared to the reproduction clock of Figure 21(e-1) as shown in Figure 21(e-3).

When a time lag between the mark trailing end edges (rising of the reproduction signal) and the reproduction clock, which is so-called jitter between data and clock, is measured, distributions as shown in Figure 21(f) are obtained. Herein, it is assumed that the 4T mark trailing end edge and the 8T mark trailing end edge have a variance such that they have the normal distributions of the same disperse values. In the case of the reproduction signal and the reproduction clock as shown in Figures 21(d-1) and 21(e-1), distribution of the time lag between the comparator output at the rising edges (mark trailing end edges) and the reproduction clock is as shown in Figure 21(f-2). Average values of distributions of 4T mark trailing end and 8T mark trailing end are respectively zero.

However, when the parameter at the 4T mark trailing end is Telp1 (the value smaller than the optimal value Telp2, an average value of the distribution of the 4T mark trailing end edge and an average value of the distribution of the 8T mark trailing end edge do not become zero as shown in Figure 21(f-1), but respectively have distributions remote from zero by the same distance. Thus, total distribution of the rising edges is larger than that of Figure 21(f-2). Similarly, when the parameter of the 4T mark trailing end is Telp3 (the value larger than the optimal value Telp2), an average value of the distribution of the 4T mark trailing end edge and an average value of the distribution of the 8T mark trailing end edge are not zero as shown in Figure 21(f-3), but respectively have distributions remote from zero by the same distance. The distribution of the 4T mark trailing end and the distribution of the 8T mark trailing end switch their places with respect to those of Figure 21(f-1). The total distribution of the rising edges is also larger than that of Figure 21(f-2).

When the absolute values of the phase errors are stored and used as the error detection output as shown in Figure 20, the error detection value changes as the recording parameter Telp changes, as shown in Figure 21(g). Therefore, the recording parameter is changed and the parameter with the smallest output of the error detection circuit 24 is selected as the optimal value. In the above example, a procedure for optimizing the parameter Telp of the 4T mark trailing end is described. However, test recording for other parameters are also performed using corresponding specific patterns and the optimal parameters can be obtained from the error detection outputs.

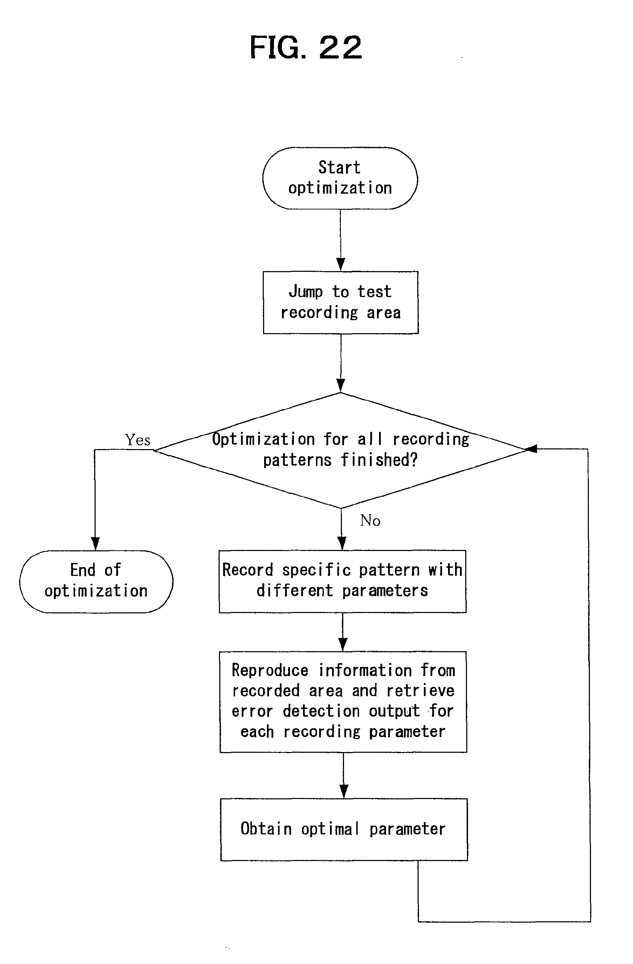

Figure 22 is a flow diagram of the above procedure which illustrates an operation for obtaining all the recording parameters. An optical head jumps to an area of a medium which is subjected to test recording, and recording is performed with the recording parameters at the mark leading end or mark trailing end being changed for each area (for example, a sector). Reproduction of the recorded area is performed and the error detection outputs are taken in for each of the areas with the parameters being modified. Then, the parameter with which the error detection output becomes the smallest is sought for. The above operations are repeated for obtaining the next parameter until all the parameters are obtained. The above-described method is described in, for example, Patent Document 1 and Patent Document 2.
Patent Document 1: Japanese Patent Application Publication No. 2000-200418 (Figure 1)
Patent Document 2: Japanese Patent Application Publication No. 2001-109597 (Figure 1)
Patent Document 3: Japanese Patent Application Publication No. 2002-141823 (Figure 1)

### DISCLOSURE OF THE INVENTION

### (Problems to be Solved by the Invention)

When recording and reproduction apparatuses for optical discs are produced on a mass-production basis, respective apparatuses do not always have same properties due to variance in properties of components to be used, changes in environments, and the like. For example, heads equipped with laser drive units and laser related to recording may have different pulse widths even when they supply the same current waveform to the lasers mainly due to variance in the laser properties. It is not assured that the same emission waveform can always be obtained by respective apparatuses. Similarly, there is a property variance to some extent in the optical discs when they are produced on a mass-production basis. Even though information is recorded with the same emission waveform, it is not assured that the same mark shape can always be obtained for respective discs.

Therefore, if the whole recording pulse standard conditions which are determined by a reference apparatus having standard properties using a reference disc having standard properties are used for mass-produced discs and apparatuses having variance in their properties, there is a problem that appropriate recording and reproduction may not be performed depending on some combinations, and it may result in poor quality.

This problem is not significant if discs are produced under adequate quality control and have a small property variance. However, if the recording pulse standard conditions which have been previously recorded on the discs are largely different from the disc performance, there is a problem that even the apparatus exactly reproduces the recording pulse standard conditions read out from the disc, the properties cannot be demonstrated fully with the disc.

Further, there are plenty of combinations in the recording pulse conditions for forming a recording mark on the disc. An optimal recording pulse for the combination of the apparatus and the disc is adjusted under the recording pulse standard conditions such that a predetermined mark length and a mark position are appropriate. However, Consideration has to be given to recording degradation caused by repeatedly recording information on the disc, recording degradation which is generated when inappropriate recording power is used for overwriting the recorded disc, and recording degradation due to changes in environment such as temperature and humidity. For example, for adjusting a mark length, among recording pulse parameters, it is good to adjust some of the parameters but others are not. Conventionally, the recording pulse conditions are adjusted without considering such properties of the recording pulse condition parameters. Thus, there is a problem of recording degradation.

The present invention is to solve the above-described problems, and an object of the present invention is to reduce an influence of a property variance and the above described various types of recording degradation in writable optical discs, and recording and reproduction apparatuses.

### (Means for Solving Problems)

The first invention is a recording pulse controlling method for adjusting recording pulses for recording information on a writable optical disc, comprising a first step and a second step. The first step is a step for adjusting a parameter related to adjustment of a recording mark length (hereinafter, referred to as a recording mark length adjustment parameter) among recording pulse parameters. In the first step, the recording mark length adjustment parameter is adjusted to have a value for forming a recording mark having a length closest to a predetermined recording mark length. The second step is a step for adjusting a parameter related to adjustment of a recording mark position (hereinafter, referred to as a recording mark position adjustment parameter) among the recording pulse parameters after the first step. In the second step, the recording mark position adjustment parameter is adjusted to have a value for forming the recording mark at a position closest to a predetermined recording mark position.

In the first step, for example, reference values of the recording pulse parameters are obtained and adjustment is performed based on the reference values. In the second step, for example, adjustment is performed based on the recording pulse parameters at least partially adjusted in the first step. For the recording pulse parameters which are not adjusted in the first step and the second step, the reference values are used. The reference values may be, for example, previously recorded on the optical disc.

The second invention is the first invention, wherein the first step includes a first sub-step for adjusting a parameter related to adjustment of a front end position of a recording mark (hereinafter, referred to as a front end position adjustment parameter) among the recording mark length adjustment parameters. The first sub-step is a step of adjusting the front end position adjustment parameter to have a value for forming the recording mark having a length closest to the predetermined recording mark length.

The third invention is the second invention, wherein the first step further includes a second sub-step for adjusting a parameter related to adjustment of a rear end position of a recording mark (hereinafter, referred to as a rear end position adjustment parameter) among the recording mark length adjustment parameters. The second sub-step is a step of adjusting the rear end position adjustment parameter to have a value for forming the recording mark having a length closest to the predetermined recording mark length after the first sub-step.

The fourth invention is the first invention, wherein the first step includes a third sub-step for adjusting a parameter related to adjustment of a front end position of a recording mark (hereinafter, referred to as a front end position adjustment parameter) and a parameter related to adjustment of a rear end position of the recording mark (hereinafter, referred to as a rear end position adjustment parameter) among the recording mark length adjustment parameters. In the third sub-step, for example, adjustment may be performed by changing the front end position adjustment parameter and the rear end position adjustment parameter at the same time.

The fifth invention is the fourth invention, wherein the first step further includes a fourth sub-step for adjusting either of the front end position adjustment parameter or the rear end position adjustment parameter that has less influence on a recording mark length of the recording mark to be formed after the third sub-step.

The sixth invention is the second invention, wherein the front end position adjustment parameter includes a parameter for adjusting a position of a first pulse of the recording pulses.

The seventh invention is the sixth invention, wherein the predetermined recording mark length is one of recording mark lengths used for recording except for a shortest recording mark length.

The eighth invention is the second invention, wherein the front end position adjustment parameter include s at least a parameter for adjusting a width of a first pulse of the recording pulses. The front end position adjustment parameter may further include a parameter for adjusting the position of the first pulse.

The ninth invention is the eighth invention, wherein the predetermined recording mark length is a shortest recording mark length of recording mark lengths used for recording.

The tenth invention is the third invention, wherein the rear end position adjustment parameter includes a parameter for adjusting a width of a cooling pulse of the recording pulses.

The eleventh invention is the third invention, wherein the rear end position adjustment parameter includes a parameter for adjusting a width of a last pulse of the recording pulses.

The twelfth invention is the eleventh invention, wherein the predetermined recording mark length is one of recording mark lengths used for recording except for a shortest recording mark length.

The thirteenth invention is the first invention, wherein the second step is a step of adjusting a pulse position of a predetermined pulse among the recording pulses with a pulse width thereof being maintained.

The fourteenth invention is the thirteenth invention, wherein the predetermined pulse includes at least two of a first pulse, a multi-pulse a last pulse, and a cooling pulse. The second step is a step for adjusting the recording mark position adjustment parameter such that the pulse positions of the predetermined pulses are changed in the same direction by the same amount respectively. The predetermined pulses may be all the pulses included in the recording pulses, and in such a case, the pulse positions of all the pulses may be changed in the same direction by the same amounts.

The fifteenth invention is a recording pulse controlling method for adjusting recording pulses for recording information on a writable optical disc, comprising a step of adjusting a parameter related to adjustment of a recording mark length (hereinafter, referred to as a recording mark length adjustment parameter) among recording pulse parameters and a step of adjusting a parameter related to adjustment of a recording mark position (hereinafter, referred to as a recording mark position adjustment parameter) among the recording pulse parameters. For adjusting the recording mark length adjustment parameter or the recording mark position adjustment parameter, a pulse position of a predetermined pulse among the recording pulses is adjusted with a pulse width thereof being maintained.

The sixteenth invention is the fifteenth invention, wherein the predetermined pulse includes any one of a first pulse, a multi-pulse, a last pulse, and a cooling pulse of the recording pulses.

The seventeenth invention is the fifteenth or sixteenth invention, wherein the writable optical disc is a rewritable optical disc.

The eighteenth invention is the fifteenth invention, wherein, when the writable optical disc is a write-once read-many optical disc, the pulse width of the predetermined pulse among the recording pulses is adjusted for adjusting the recording mark length adjustment parameter or the recording mark position adjustment parameter.

Whether the writable optical disc is a write-once read-many type or other types (for example, rewritable type) is determined by, for example, a discrimination signal obtained from the optical disc, or the like.

The nineteenth invention is a recording pulse controlling device for adjusting recording pulses for recording information on a writable optical disc, comprising a parameter adjustment section and a recording pulse adjustment section. The parameter adjustment section adjusts a recording pulse parameter. The recording pulse adjustment section adjusts the recording pulse in accordance with the recording pulse parameter adjusted by the parameter adjustment section. The parameter adjustment section adjusts a parameter related to adjustment of a recording mark length (hereinafter, referred to as a recording mark length adjustment parameter) among the recording pulse parameters, and then adjusts a parameter related to adjustment of a recording mark position (hereinafter, referred to as a recording mark position adjustment parameter). For adjusting the recording mark length adjustment parameter, the recording mark length adjustment parameter is adjusted to have a value for forming a recording mark having a length closest to a predetermined recording mark length among recording marks recorded with the recording mark length adjustment parameter being varied. For adjusting the recording mark position adjustment parameter, the recording mark position adjustment parameter is adjusted to have a value for forming a recording mark at a position closest to a predetermined recording mark position among recording marks recorded with the recording mark position adjustment parameter being varied.

The twentieth invention is the nineteenth invention, wherein, for adjusting the recording mark length adjustment parameter, a parameter related to adjustment of a front end position of a recording mark (hereinafter, referred to as a front end position adjustment parameter) among the recording mark length adjustment parameters is adjusted to have a value for forming a recording mark having a length closest to the predetermined recording mark length among the recording marks recorded with the front end position adjustment parameter being varied.

The twenty-first invention is the twentieth invention, wherein, for adjusting the recording mark length adjustment parameter, a parameter related to adjustment of a rear end position of a recording mark (hereinafter, referred to as a rear end position adjustment parameter) among the recording mark length adjustment parameters is adjusted to have a value for forming a recording mark having a length closest to the predetermined recording mark length among the recording marks recorded with the rear end position adjustment parameter being varied after the adjustment of the front end position adjustment parameter.

The twenty-second invention is the nineteenth invention, wherein, for adjusting the recording mark length adjustment parameter, a parameter related to adjustment of a front end position of a recording mark (hereinafter, referred to as a front end position adjustment parameter) and a parameter related to adjustment of a rear end position of a recording mark (hereinafter, referred to as a rear end position adjustment parameter) among the recording mark length adjustment parameters are adjusted. For adjusting the recording mark length adjustment parameters, adjustment may be performed, for example, by changing the front end position adjustment parameters and the rear end position adjustment parameters at the same time.

The twenty-third invention is the twenty-second invention, wherein, for adjusting the recording mark length adjustment parameter, either of the front end position adjustment parameter or the rear end position adjustment parameter that has less influence on a recording mark length of a recording mark to be formed is further adjusted after the changes in the front end position adjustment parameter and the rear end position adjustment parameter.

The twenty-fourth invention is the twentieth invention, wherein the front end position adjustment parameter includes a parameter for adjusting a position of a first pulse of the recording pulses.

The twenty-fifth invention is the twenty-fourth invention, wherein the predetermined recording mark length is one of recording mark lengths used for recording except for a shortest recording mark length.

The twenty-sixth invention is the twentieth invention, wherein the front end position adjustment parameter includes at least a parameter for adjusting a width of a first pulse of the recording pulses. The front end position adjustment parameter may further include a parameter for adjusting a position of the first pulse.

The twenty-seventh invention is the twenty-sixth invention , wherein the predetermined recording mark length is a shortest recording mark length of recording mark lengths used for recording.

The twenty-eighth invention is the twenty-first invention, wherein the rear end position adjustment parameter includes a parameter for adjusting a width of a cooling pulse of the recording pulses.

The twenty-ninth invention is the twenty-first invention, wherein the rear end position adjustment parameter include s a parameter for adjusting a width of a last pulse of the recording pulses.

The thirtieth invention is the twenty-ninth invention, wherein the predetermined recording mark length is one of recording mark lengths used for recording except for a shortest recording mark length.

The thirty-first invention is the nineteenth invention, wherein, for adjusting the recording mark position adjustment parameter, a pulse position of a predetermined pulse among the recording pulses is adjusted with a pulse width thereof being maintained.

The thirty-second invention is the thirty-first invention, wherein the predetermined pulse includes at least two of a first pulse, a multi-pulse, a last pulse, and a cooling pulse. For adjusting the recording mark position adjustment parameter, the recording mark position adjustment parameter is adjusted such that the pulse positions of the predetermined pulses are changed in the same direction by the same amount respectively. The predetermined pulses may be all the pulses included in the recording pulses, and in such a case, the pulse positions of all the pulses may be changed in the same direction by the same amount.

The thirty-third invention is a recording pulse controlling device for adjusting recording pulses for recording information on a writable optical disc, comprising a parameter adjustment section and a recording pulse adjustment section. The parameter adjustment section adjusts a recording pulse parameter. The recording pulse adjustment section adjusts the recording pulse in accordance with the recording pulse parameter adjusted by the parameter adjustment section. The parameter adjustment section adjusts a parameter related to adjustment of a recording mark length (hereinafter, referred to as a recording mark length adjustment parameter), and a parameter related to adjustment of a recording mark position (hereinafter, referred to as a recording mark position adjustment parameter) among the recording pulse parameters. For adjusting the recording mark length adjustment parameter or the recording mark position adjustment parameter, a pulse position of a predetermined pulse among the recording pulses is adjusted with a pulse width thereof being maintained.

The thirty-fourth invention is the thirty-third invention, wherein the predetermined pulses includes any one of a first pulse, a multi-pulse a last pulse, and a cooling pulse of the recording pulses.

The thirty-fifth invention is the thirty-third or thirty-fourth invention, wherein the writable optical disc is a rewritable optical disc.

The thirty-sixth invention is the thirty-third invention, wherein, when the writable optical disc is a write-once read-many optical disc, the pulse width of the predetermined pulse among the recording pulses is adjusted for adjusting the recording mark length adjustment parameter or the recording mark position adjustment parameter.

The thirty-seventh invention is an optical disc apparatus, comprising an optical head, an error detection unit and a recording pulse controlling unit. The optical head irradiates an optical disc with laser, receives reflected light and converts the light into a reproduction signal. The error detection unit obtains the reproduction signal and detects an error between a recording mark formed on the optical disc and a recording mark which serves as a reference. The recording pulse controlling unit adjusts recording pulses for recording information on the optical disc based on the error detected by the error detection unit. The recording pulse controlling unit includes a parameter adjustment section and a recording pulse adjustment section. The parameter adjustment section adjusts a recording pulse parameter. The recording pulse adjustment section adjusts the recording pulse in accordance with the recording pulse parameter adjusted by the parameter adjustment section. The parameter adjustment section adjusts a parameter related to adjustment of a recording mark length (hereinafter, referred to as a recording mark length adjustment parameter) among the recording pulse parameters, and then adjusts a parameter related to a recording mark position (hereinafter, referred to as a recording mark position adjustment parameter). For adjusting the recording mark length adjustment parameter, the recording mark length adjustment parameter is adjusted to have a value for forming a recording mark having a smallest error with respect to a predetermined recording mark length among recording marks recorded with the recording mark length adjustment parameter being varied. For adjusting the recording mark position adjustment parameter, the recording mark position adjustment parameter is adjusted to have a value for forming a recording mark having a smallest error with respect to a predetermined recording mark position among recording marks recorded with the recording mark position adjustment parameter being varied.

The thirty-eighth invention is an optical disc apparatus, comprising an optical head, an error detection unit and a recording pulse controlling unit. The optical head irradiates an optical disc with laser, receives reflected light and converts the light into a reproduction signal. The error detection unit obtains the reproduction signal and detects an error between a recording mark formed on the optical disc and a recording mark which serves as a reference. The recording pulse controlling unit adjusts recording pulses for recording information on the optical disc based on the error detected by the error detection unit. The recording pulse controlling unit includes a parameter adjustment section and a recording pulse adjustment section. The parameter adjustment section adjusts a recording pulse parameter. The recording pulse adjustment section adjusts the recording pulse in accordance with the recording pulse parameter adjusted by the parameter adjustment section. The parameter adjustment section adjusts a parameter related to adjustment of a recording mark length (hereinafter, referred to as a recording mark length adjustment parameter), and a parameter related to adjustment of a recording mark position (hereinafter, referred to as a recording mark position adjustment parameter) among the recording pulse parameters. For adjusting the recording mark length adjustment parameter or the recording mark position adjustment parameter, a pulse position of a predetermined pulse among the recording pulses is adjusted with a pulse width thereof being maintained.

The thirty-ninth invention is the thirty-seventh or thirty-eighth invention , wherein the error detection unit detects the error using a level which is a center of all edges of a waveform when the recording mark formed on the optical disc is reproduced. The level which is a center of all edges of a waveform is a level such that, for example, when a phase error of a reproduction waveform is detected having that level as a threshold value, the detected phase error has a minimum value.

The fortieth invention is the thirty-seventh or thirty-eighth invention, wherein the error detection unit detects the error using a level which is a center of total energy of a waveform when a recording mark formed on the optical disc is reproduced.

The forty-first invention is the thirty-seventh or thirty-eighth invention, further comprising a recording pattern generation circuit for outputting to the recording pulse controlling unit a predetermined recording pattern including a recording mark to be adjusted at the recording pulse controlling unit. The predetermined recording pattern includes recording marks having various lengths and spaces having various lengths at substantially the same ratio respectively.

The forty-second invention is the thirty-seventh or thirty-eighth invention, wherein the recording pulse controlling unit adjusts the recording mark length adjustment parameter and recording mark position adjustment parameter with a level to be a center of all edges of a waveform or a level to be a center of total energy of a waveform when the recording mark formed on the optical disc is reproduced being kept substantially constant.

The forty-third invention is the forty-second invention, wherein, for adjusting the recording mark length adjustment parameters corresponding to various recording marks, the recording pulse controlling unit performs trial recording with the recording mark length adjustment parameters corresponding to a part of the recording marks being adjusted such that the part of the recording marks become longer and adjusts recording mark lengths of the part of the recording marks, and also performs trial recording with the recording mark length adjustment parameters corresponding to other recording marks being adjusted such that the other recording marks become shorter and adjusts the recording mark lengths of the other recording marks.

The forty-fourth invention is the forty-second invention, wherein, for adjusting the recording mark position adjustment parameters corresponding to various recording marks, the recording pulse controlling unit performs trial recording with the recording mark position adjustment parameters being adjusted such that the various recording marks move in reverse directions respectively, and adjusts the recording mark positions of the various recording marks respectively.

### (Effects of the Invention)

As described above, according to the present invention, by reducing an influence of a property variance of writable optical discs and recording and reproduction apparatuses and by performing an appropriate recording pulse adjustment control operation, condition of recorded information can be improved and errors in reproduction can be decreased. Furthermore, yields of the optical discs and recording and reproduction apparatuses in mass production increase, and improvement in quality of products and cost reduction can be achieved.

### BRIEF DESCRIPTION OF THE DRAWINGS

Figure 1 is a flow diagram of a recording pulse adjustment according to an embodiment of the present invention.
Figure 2 is a diagram illustrating recording pulse conditions according to the embodiment of the present invention.
Figure 3 is a diagram showing a waveform of recording pulses of respective mark lengths according to the embodiment of the present invention.
Figure 4 is a diagram illustrating edge shift detection according to the embodiment of the present invention.
Figure 5 is a flow diagram of recording pulse adjustment procedure according to the embodiment of the present invention.
Figure 6 is a diagram illustrating recording pulse adjustment in a mark length adjustment of a 2T mark.
Figure 7 is a diagram illustrating recording pulse adjustment in a mark length adjustment of a 2T mark.
Figure 8 is a diagram illustrating recording pulse adjustment in a mark position adjustment of a 2T mark.
Figure 9 is a diagram showing a change in an edge shift amount obtained when recording pulses are adjusted for a 2T mark.
Figure 10 is a diagram showing a cross power property and a repeating property.
Figure 11 is a diagram illustrating recording pulse adjustment in a mark length adjustment of a 3T mark.
Figure 12 is a diagram illustrating recording pulse adjustment in a mark length adjustment of a 3T mark.
Figure 13 is a diagram illustrating recording pulse adjustment in a mark position adjustment of a 3T mark.
Figure 14 is a diagram showing a change in an edge shift amount obtained when recording pulses are adjusted for a 3T mark.
Figure 15 is a diagram showing recording pulse conditions.
Figure 16 is a block diagram showing an exemplary structure of a recording and reproduction apparatus according to an embodiment of the present invention.
Figure 17 is a block diagram showing an exemplary structure of a recording and reproduction apparatus according to an embodiment of the present invention.
Figure 18 is a diagram illustrating a leading end position and a trailing end position of a recording mark.
Figure 19 is a diagram for illustrating a recording pulse adjustment showing adjustment of recording pulses depending upon discs.
Figure 20 is a block diagram showing a structure of a conventional recording and reproduction apparatus.
Figure 21 is a diagram showing a specific operation of a conventional error detection circuit.
Figure 22 is a flow diagram showing an operation for obtaining recording pulse parameters in a conventional example.

### BEST MODE FOR CARRYING OUT THE INVENTION

Hereinafter, embodiments of the present invention will be described with reference to the drawings.

### (Embodiment)

An object of recording pulse controlling according to the present invention is to provide the best recording for reproducing data recorded on an optical disc with minimum error. In order to achieve the best recording condition, parameters related to recording have to be optimized. The parameters related to recording include, for example, a recording power parameter, a recording pulse parameter, a servo parameter for recording, and the like. The present invention relates particularly to adjustment controlling of the recording pulse parameter, i.e., parameters related to a shape of a recording pulse waveform, which will be described below.

First, a recording method used in this embodiment will be described. For writing data on an optical disc, a mark edge recording method using a multi-pulse is employed. Data is written on a disc as length information of marks and spaces. A modulation method is employed in which lengths of marks have integer values within the range from 2T to 9T (T represents a time period of one cycle of clock) and lengths of spaces have integer values within the range from 2T to 9T. Further, in this embodiment, it is assumed that a distortion in mark shapes or thermal interference among the marks occur around borders between the marks and spaces in combinations of the marks having the length of 2T, 3T, 4T or higher (referred to as 2Tm, 3Tm, and 4Tm) and the spaces having the length of 2T, 3T, 4T or higher (referred to as 2Ts, 3Ts, and 4Ts). One mark has two portions which are adjacent to a space: a front end and a rear end of the mark. Thus, recording of a correct mark length can be achieved by recording pulse adjustment of edge positions of recording pulses which are used for recording in accordance with these combinations (recording compensation). For example, in a case of a combination of 4Tm or higher with 4Ts or higher, the number of combinations of the mark front end pulse conditions is 3x3=9, and the mark rear end pulse conditions is 3x3=9. Different values can be set for each of conditions, so there are values set for 18 conditions in total.

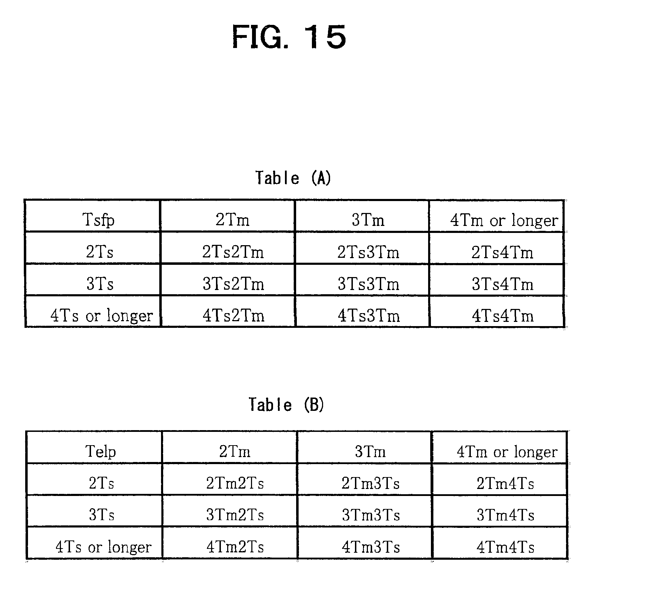

Figure 15 shows tables including values for the mark front end pulse conditions and the mark rear end pulse conditions. For example, in Table (A) in Figure 15, "4Ts4Tm" in a lower right box indicates that it contains a condition for a mark front end pulse in a border between a space having a length of 4T or longer and a subsequent mark having a length of 4T or longer. In Table (B) in Figure 15, "2Tm4Ts" in an upper right box indicates that it contains a condition for a mark rear end pulse in a border between a mark having a length of 2T and a subsequent space having a length of 4T or longer. As shown in the tables of Figure 15, recording pulse conditions have to be adjusted and determined for each of the combinations of the recording mark length and the space length.

Eighteen conditions as shown in Figure 15 are determined using a representative disc which is a reference for properties and a representative recording and reproduction apparatus as a reference. The determined recording pulse conditions are previously recorded in a specific area on a disc as recording pulse standard conditions. The recording pulse standard conditions include, for example, a width of a first pulse of a recording pulse (Ttop), a position of the first pulse (dTtop), a width of a multi-pulse (Tmp), a width of a cooling pulse added after the last pulse (dTe), and the like. In this embodiment, a pulse condition with values being changed so as to conform to a combination pattern of a mark to be recorded and a space will be described by way of example.

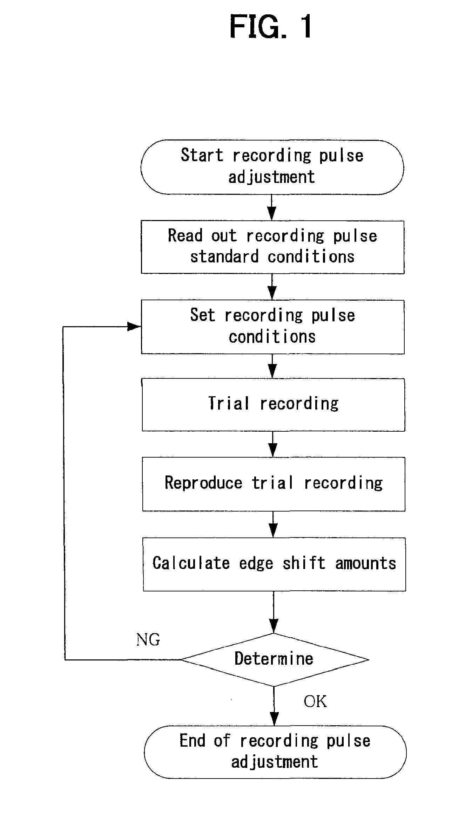

Figure 1 is a flow diagram for illustrating a recording pulse controlling method according to an embodiment of the present invention. In a procedure for adjusting a recording pulse, first, the recording pulse standard conditions which have been previously recorded in a specific area on a disc are read and set as recording pulse conditions. A trial recording is performed in a specific recording area and information is reproduced from the area on which the trial recording is performed. For examining a recording condition, parameters which have correlation to errors in reproduction are sought for. In this example, the recording condition is confirmed by obtaining an edge shift amount, which will be described below. If the edge shift amount is a predetermined amount or lower, or near the minimum amount, it is determined OK and the recording pulse adjustment is finished. If the edge shift amount is a predetermined amount or higher, or not around the minimum amount, it is determined NG. The best recording pulse condition is predicted based on the edge shift amount, and the recording pulse condition is set. The sequence from the trial recording as described above is repeated, and the procedure is finished when the edge shift amount is a predetermined amount or lower, or near the minimum amount.

Alternatively, a few patterns of recording pulse conditions may be prepared based on the recording pulse standard conditions which have been read out. During the trial recording, recording may be performed at once with the recording pulse conditions changed. Information is reproduced from the area on which the trial recording is performed. In reproduction, an edge shift amount is obtained for each of the recording pulse conditions, and the recording pulse conditions with the minimum edge shift amount are employed as determined recording pulse conditions. However, when it is determined that the edge shift amount will be smaller if recording pulse conditions further different from the recording pulse conditions prepared based on the recording pulse standard conditions as described above are used, a few patterns of recording pulse conditions which are considered to yield small er edge shift amounts may be prepared. In trial recording, recording is performed at once with the recording pulse conditions being changed, and information is reproduced from the area in which the trial recording is performed. As described above, when information is reproduced, an edge shift amount is obtained for each of the recording pulse conditions, and the recording pulse conditions with around the minimum edge shift amount are employed as determined recording pulse conditions. This means that an optimal point of the parameter is sought in the settings relatively close to the recording pulse standard conditions in the first recording but the optimal conditions cannot be found, so the second recording is further performed to broaden the range for searching the parameter. This may happen when properties of the disc and properties of the recording pulse standard conditions are different. Also, such a case may be observed when the recording and reproduction property is significantly different from the standard property depending upon a combination of a disc and a recording and reproduction apparatus.

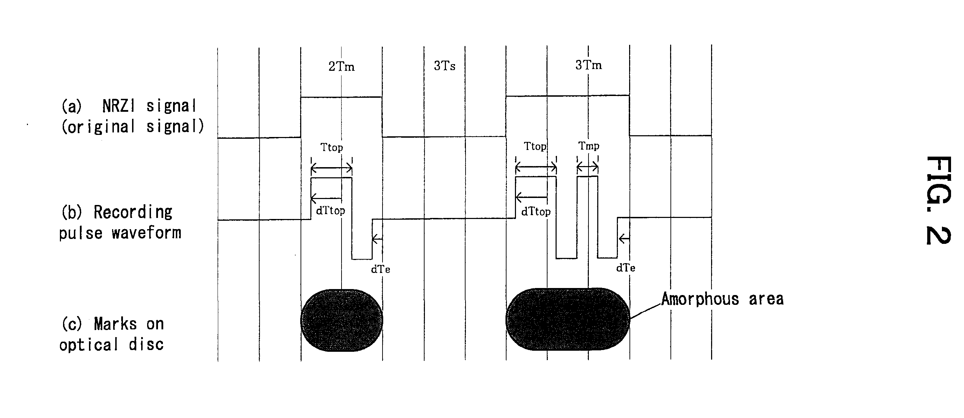

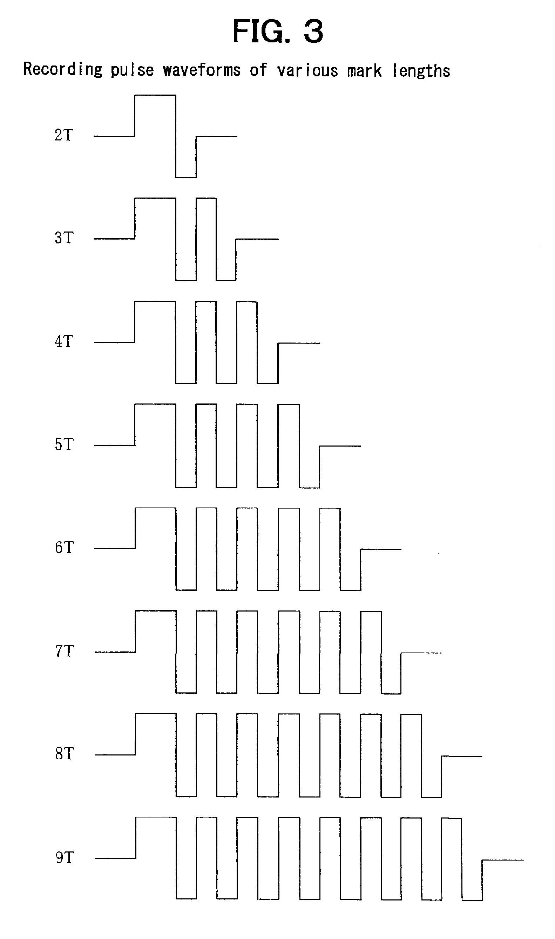

Figure 2 shows a relationship between an original signal to be recorded (NRZI signal), a recording pulse waveform and parameters forming the recording pulse waveform, and marks on the disc recorded using the recording pulses. Figure 2 shows an example of a recording series of 2Tm3Ts3Tm formed of a mark of 2T width, a space of 3T width, and a mark of 3T width. The parameters of a recording pulse for forming the mark of 2T width, which is the shortest mark, includes a width of a first pulse (Ttop), a position of a first pulse (dTtop), and a width of a cooling pulse (dTe), as mentioned above. The parameters of a recording pulse for forming the mark of 3T width or longer includes a width of a first pulse (Ttop), a position of a first pulse (dTtop), a width of multi-pulse (Tmp) and a width of a cooling pulse (dTe). Figure 3 shows shapes of recording pulses for the widths of 2T to 9T. Only the pulse waveform for 2T mark does not include a multi-pulse.

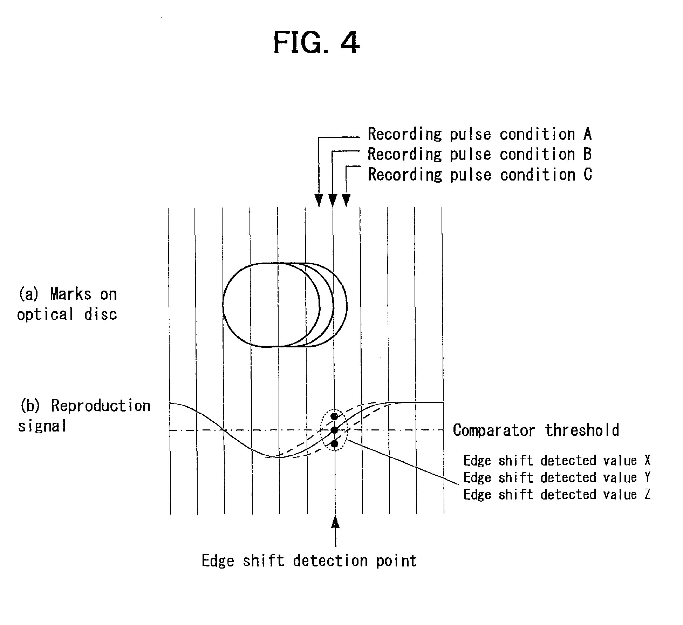

Now, how to obtain the edge shift amounts will be described with reference to Figure 4. Figure 4 shows marks each of which is formed by changing a trailing end edge position of a 3T mark using a dTe parameter, which is a parameter for a width of the cooling pulse described with reference to Figure 2, and reproduction signals when the marks are reproduced. Recording pulse conditions A, B, and C respectively have dTe of, for example, -1, 0, and 1, so that the cooling pulse width is changed to form marks of different widths. At an edge shift detection point, an amplitude level of the reproduction signal from the comparator threshold reference is sampled from the reproduction signal of Figure 4(b) to obtain an edge shift value. In this example, an amplitude value is regarded as a shift in time axis to obtain an edge shift. However, a shift in time axis itself may be used. This means that, as described above with reference to Figure 21, time lag between the reproduction clock and a digitalized pulse generated by a comparator may be used. As shown in Figure 4, when a mark formed with Recording pulse condition A is reproduced, an edge shift amount value X is obtained. In this case, an edge shift amount value X has a positive value given that the comparator threshold reference is at 0 level. It can be determined that the mark length is shorter than the reference. When a mark formed with Recording pulse condition C is reproduced, an edge shift amount value Z is obtained. In this case, the edge shift amount value Z has a negative value given that the comparator threshold reference is at 0 level. It can be determined that the mark length is longer than the reference. When a mark formed with Recording pulse condition B is reproduced, an edge shift amount value Y is obtained. In this case, the edge shift amount value Y is almost zero given that the comparator threshold reference is at 0 level. It can be determined that the mark length is approximately optimum. In reproduction, the edge shifts are integrated for a predetermined period, or an average in the predetermined period is calculated, thereby obtaining an edge shift amount. If the edge shift amount is obtained for each of the combinations of the mark lengths and the space lengths shown in Figure 15 as mentioned above, it can be determined with which lengths the marks are not within the optimal setting.

The threshold value of the comparator may be a level which is the center of all edges in the waveform when the recording mark formed on optical disc is reproduced. As used herein, the level which is the center of all the edges in the waveform refers to a level at which a phase error of a reproduction waveform detected with the level being a threshold value is minimum. The threshold value of the comparator may be a level which is a center of all energy of a waveform when a recording mark formed on an optical disc is reproduced.

A flow of recording pulse adjustment according to the present invention has been described with reference to a flow diagram of Figure 1. Next, detailed adjustment method and adjustment procedure of the recording pulses will be described.

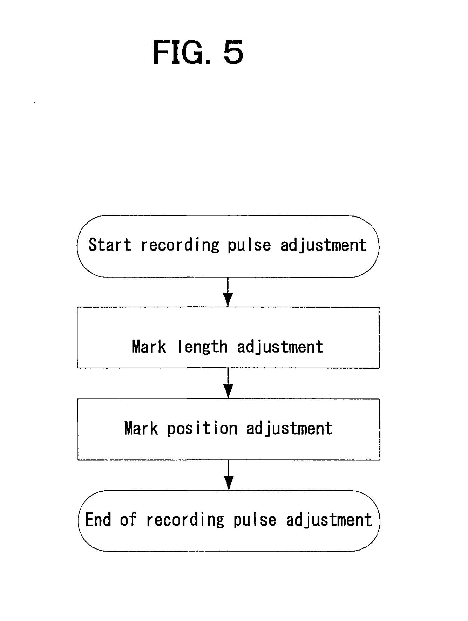

Figure 5 is a flow diagram of the adjustment procedure. First, a length of the mark is adjusted to an appropriate length. Hereinafter, a method for adjusting a 2T mark will be described. The recording pulse parameters for recording a 2T mark is Ttop, dTtop, and dTe, as described above.

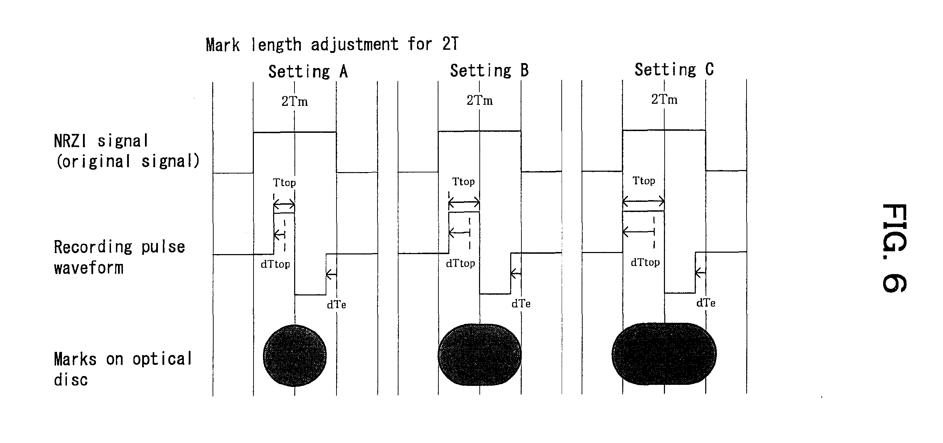

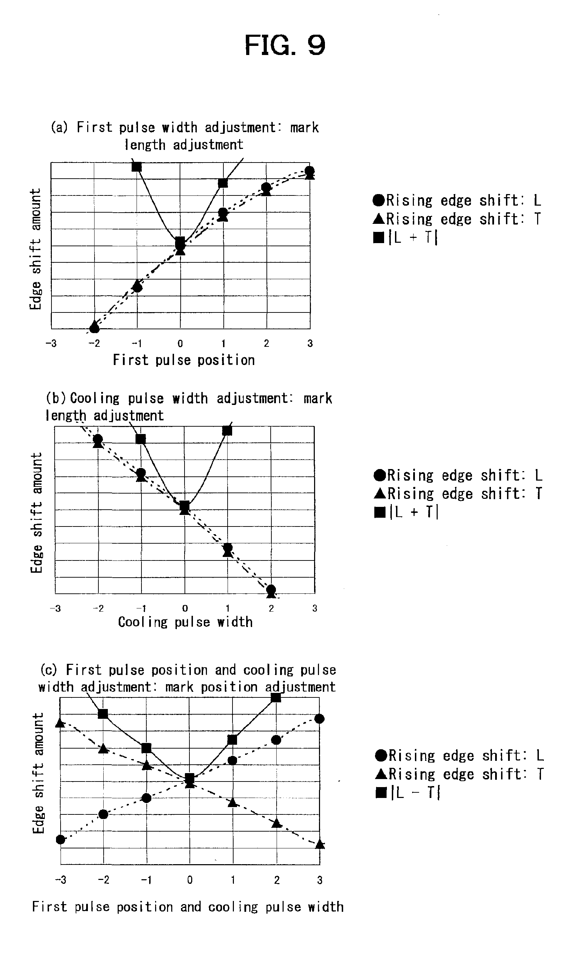

A first step is a mark length adjustment by adjusting a Ttop parameter and a dTtop parameter. Figure 6 shows how the mark length of a 2T mark to be formed is changed with a first pulse width thereof being changed by changing the Ttop parameter and the dTtop parameter at the same time in the same direction Changing the Ttop parameter and the dTtop parameter at the same time in the same direction means that a falling position of a first pulse and a cooling pulse width are fixed, and only a first pulse width is changed. When the first pulse width is changed, the mark length to be formed is changed. An edge shift amount L at the leading end and an edge shift amount T at the trailing end of the 2T mark are obtained. L and T are added and the absolute value is obtained. The absolute value of addition of L and T represents a mark length, and 0 means an ideal mark length. A recording pulse setting with the minimum absolute value is employed. Figure 9(a) shows a specific example of obtained L, T and |L+T| while the Ttop parameter and the dTtop parameter are changed. In this example, setting 0 is selected. As shown in Figure 3, there is no multi-pulse in the recording pulses which form the 2T mark. Thus, the first pulse width has a large influence on the trailing end edge. When the first pulse width is changed, not only the leading end edge but also the trailing end edge is changed. This means that the mark width is changed in both a direction toward the leading end and a direction toward the trailing end at the same time.

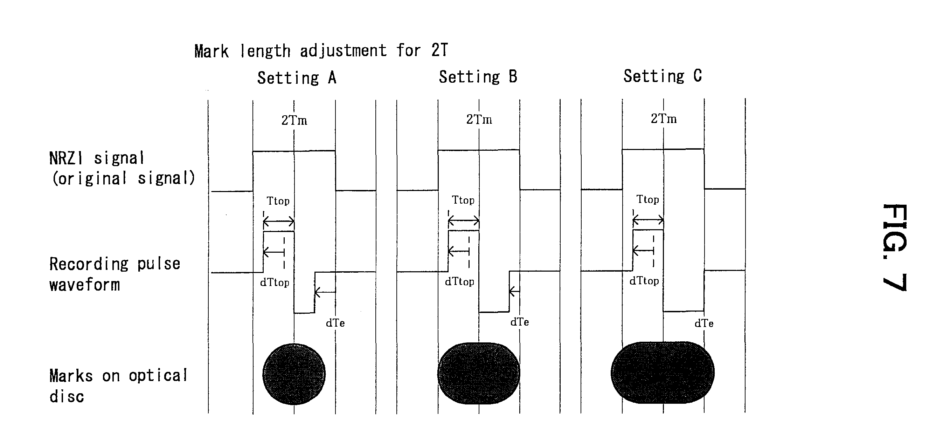

A second step is mark length adjustment by adjusting the dTe parameter. Figure 7 shows how a cooling pulse width is changed by changing the dTe parameter to change the mark length of a 2T mark to be formed. Changing the dTe parameter means that the width of the first pulse and a falling position of the first pulse are fixed, and only the cooling pulse width is changed. When the cooling pulse width is changed, the mark length to be formed is changed. An edge shift amount L at the leading end and an edge shift amount T at the trailing end of the 2T mark are obtained. L and T are added and the absolute value is obtained. The absolute value of addition of L and T represents the mark length, and 0 means an ideal mark length. A recording pulse setting with the minimum absolute value is employed. Figure 9(b) shows a specific example of obtained L, T and |L+T| with the dTe parameter being changed. In this example, setting 0 is selected.

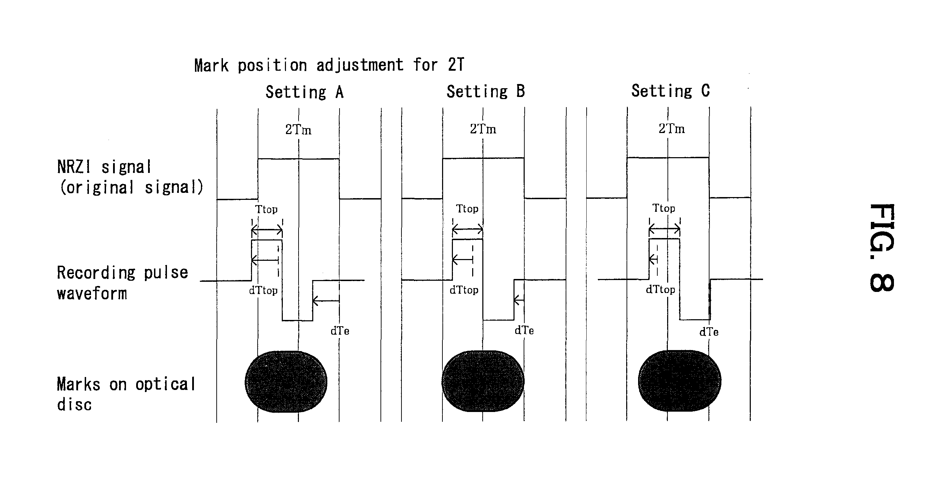

A third step is mark position adjustment by adjusting the dTtop parameter and the dTe parameter. Figure 8 shows how the position of a 2T mark to be formed is changed with a position of the entire recording pulse being changed by changing the dTtop parameter and the dTe parameter at the same time in the same direction Changing the dTtop parameter and the dTe parameter at the same time in the same direction means that the first pulse width and the cooling pulse width are fixed, and only the position of the entire recording pulse is changed. When the position of the entire recording pulse is changed, the position of the mark to be formed is changed. An edge shift amount L at the leading end and an edge shift amount T at the trailing end of the 2T mark are obtained. L and T are added and the absolute value is obtained. The absolute value of addition of L and T represents a phase shift of the mark, and 0 means an ideal position of the mark. A recording pulse setting with the minimum absolute value is employed. Figure 9(c) shows a specific example of obtained L, T and |L-T| with the dTtop parameter and the dTe parameter being changed. In this example, setting 0 is selected. In this way, the mark length adjustment and the mark position adjustment are performed in the first through third steps.

The mark length adjustment is performed in the first and the second steps. However, the mark length adjustment by changing the cooling pulse width in the second step is a supplementary step to the first step. It is preferable that the cooling pulse width is not largely changed from the recording pulse standard conditions. Alternatively, the cooling pulse width may not be changed at all from the recording pulse standard conditions. This is because changes in the cooling pulse width may cause repeated recording degradation caused by repeatedly recording information on a disc thereby leading to disc degradation, recording degradation which occurs when inappropriate recording power is used for overwriting data on a recorded disc, recording degradation due to changes in environment such as temperature and humidity, and the like.

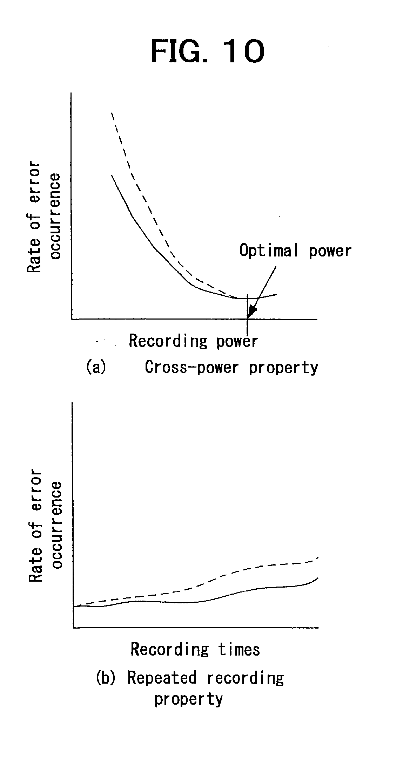

This will be described in more detail with reference to Figure 10. Figure 10(a) shows a percentage of errors occurring during reproduction of information from an area which is recorded with an optimal power and then recorded with recording power being gradually changed. This is called a cross-power property. Figure 10(b) shows a percentage of errors occurring during reproduction of information from an area where recording is repeatedly performed in the same area with an optimal power. This is called a repeated recording property. The cross power property and the repeated recording property are percentage of errors occurring when information is reproduced in an area with recording degradation made by intentionally applying a recording stress. In Figure 10, broken lines represent cases where recording is performed with the cooling pulse width being set largely different from those of the recording pulse standard conditions, and solid lines represent cases where recording is performed with the cooling pulse width being set substantially the same as those of the recording pulse standard conditions. As can be seen from the figure, when the cooling pulse width is set to be largely different from those of the recording pulse standard conditions for recording, a percentage of error is large and recording degradation tend to easily become larger in the area.

Next, a method for adjusting a mark having the length of 3T or longer will be described. The recording pulse parameters for recording a mark having the length of 3T or longer is Tmp, Ttop, dTtop, and dTe as described above. 3T mark adjustment will be described as an example.

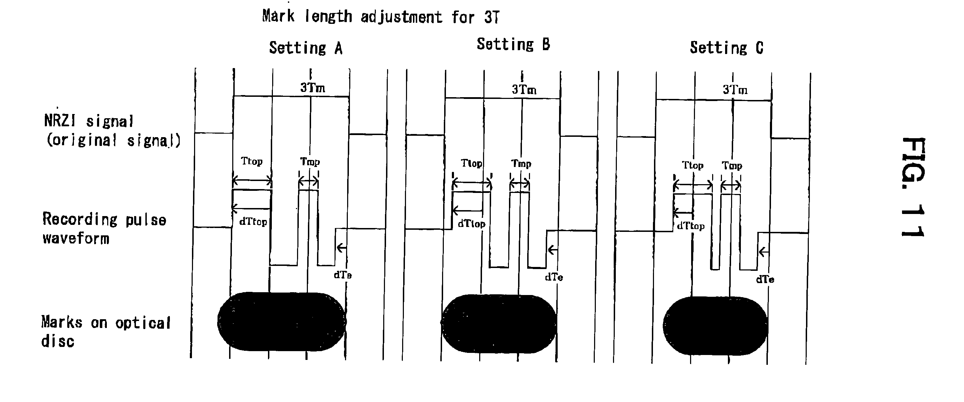

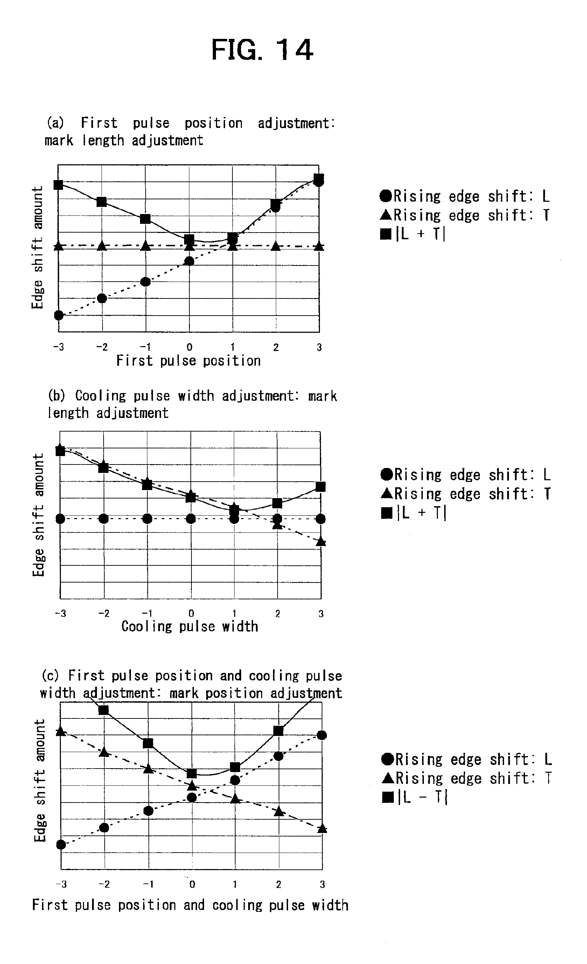

A first step is mark length adjustment by adjusting the dTtop parameter. As in the 2T mark adjustment, the first pulse width may be changed by changing the Ttop parameter and the dTtop parameter at the same time in the same direction to change the mark length to be formed. However, the feature of the present embodiment is that the Ttop parameter, which is a parameter for the first pulse width, is set at the recording pulse standard, and only the dTtop parameter, which is a parameter for controlling the position of the first pulse, is changed for adjusting the mark length. The Tmp parameter, which is a parameter for controlling the multi-pulse width, is also set to the recording pulse standard. Changing the dTtop parameter means that the first pulse width, the multi-pulse width and the cooling pulse width are fixed, and only a falling position of the first pulse is changed. As shown in Settings A through C in Figure 11, when the falling position of the first pulse is changed, the mark length to be formed is changed. An edge shift amount L at the leading end and an edge shift amount T at the trailing end of the 3T mark are obtained. L and T are added and the absolute value is obtained. The absolute value of addition of L and T represents the mark length, and 0 means an ideal mark length. A recording pulse setting with the minimum absolute value is employed. Figure 14(a) shows a specific example of obtained L, T and |L+T| with the dTtop parameter being changed. Because only the dTtop parameter which relates to the leading end edge of the mark is changed, only the leading end edge shift amount L is changed, and the trailing end edge shift amount T is not changed. Thus, the mark length represented by |L+T| changes. As the dTtop setting with the minimum |L+T|, 0 or 1 setting is selected.

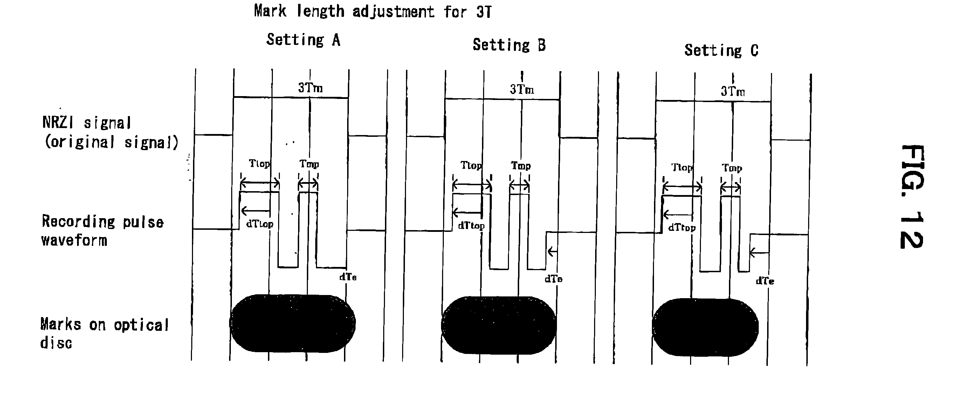

A second step is mark length adjustment by adjusting the dTe parameter. Changing the dTe parameter means that the width of the first pulse, the falling position of the first pulse and the multi-pulse width are fixed, and only the cooling pulse width is changed. As shown in Settings A through C in Figure 12, when the cooling pulse width is changed, the mark length to be formed is changed. An edge shift amount L at the leading end and an edge shift amount T at the trailing end of the 3T mark are obtained. L and T are added and the absolute value is obtained. The absolute value of addition of L and T represents the mark length, and 0 means an ideal mark length. A recording pulse setting with the minimum absolute value is employed. Figure 14(b) shows a specific example of obtained L, T and |L+T| with the dTe parameter being changed. In this example, setting 1 is selected.

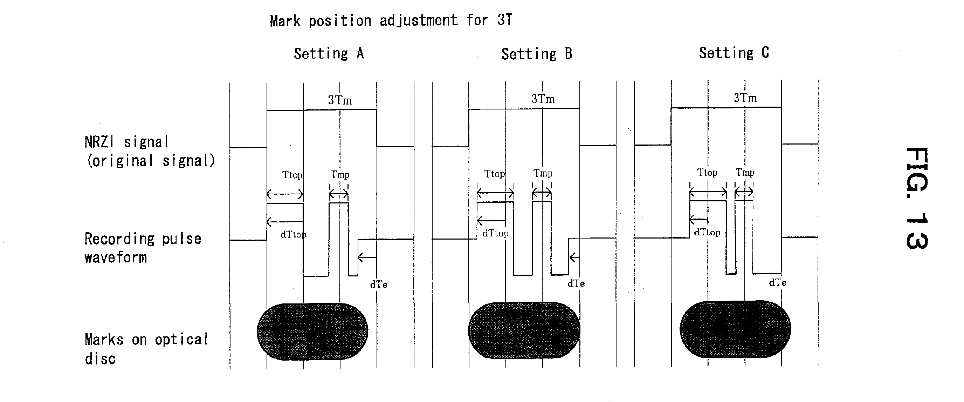

A third step is mark position adjustment by adjusting the dTtop parameter and the dTe parameter. Since the dTtop parameter and the dTe parameter are changed at the same time in the same direction, the position of the entire recording pulse is changed while the multi-pulse width and the multi-pulse position are fixed, and the position of the 3T mark to be formed is changed. As shown in Settings A through C in Figure 13, when the position of the entire recording pulse is changed, the position of the mark to be formed is changed. An edge shift amount L at the leading end and an edge shift amount T at the trailing end of the 3T mark are obtained. An absolute value of L and an absolute value of T are added. The absolute value of addition of L and T represents a phase shift of the mark, and 0 means an ideal position of the mark. A recording pulse setting with the minimum absolute value is employed. Figure 14(c) shows a specific example of obtained L, T and |L-T| with the dTtop parameter and the dTe parameter being changed. In this example, setting 0 is selected. In this way, the mark length adjustment and the mark position adjustment are performed in the first through third steps.

If the width of the first pulse is changed to become shorter in the mark length adjustment at the first step, the cross power property as described above may deteriorate. Further, if the width of the fist pulse is changed to become longer in the mark length adjustment in the first step, the repeated recording property as described above may deteriorate. In Figure 10, broken lines represent the cases where recording is performed with the width of the first pulse being set largely different from those of the recording pulse standard conditions, and solid lines represent the cases where recording is performed with the first pulse width being set substantially the same as those of the recording pulse standard conditions. As can be seen from the figure, when recording is performed with the first pulse width being set largely different from those of the recording pulse standard conditions, recording degradation tend to occur easily. A feature of the present invention is that, in the mark length adjustment at the first step, the width of the first pulse is set to the recording pulse standard conditions, and only the position of the first pulse is adjusted. The mark length adjustment is performed in the first step and the second step. However, the mark length adjustment by changing the cooling pulse width in the second step is a supplementary step to the first step. Thus, it is preferable not to change the cooling pulse width largely from the recording pulse standard condition.

In the mark length adjustment, the parameters may be adjusted such that the front edge position and the rear edge position of the mark are changed at the same time. Further, this adjustment may be a major adjustment, and fine adjustment may be made after the major adjustment. The fine adjustment may be performed by adjusting the parameter that is either one of the parameter changing the front end position of the mark or the parameter changing the rear end position and that makes a smaller difference in the mark with varied parameters.

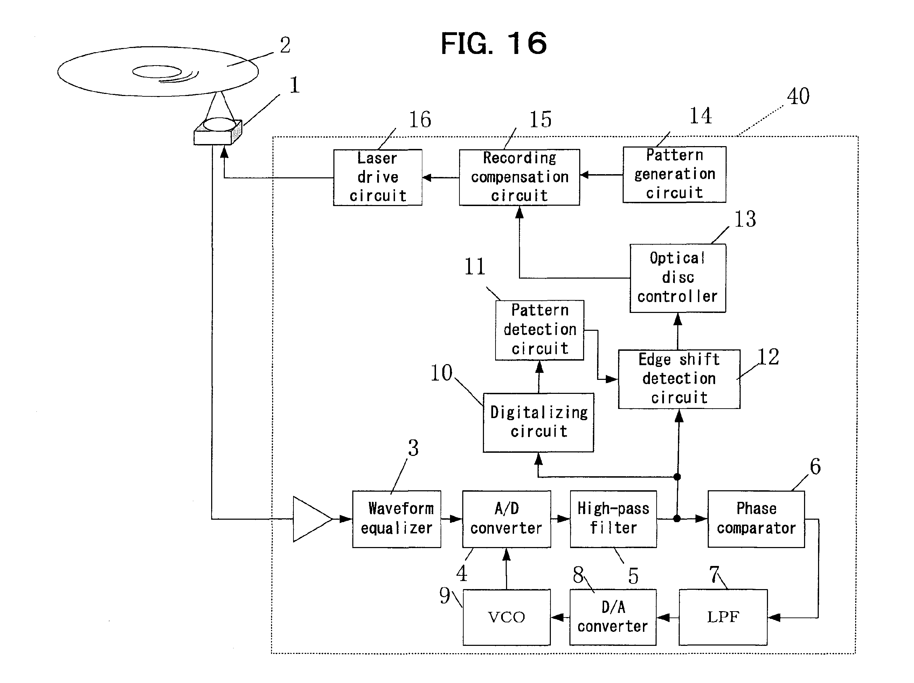

A recording and reproduction apparatus for optical discs (optical disc apparatus) which embodies the recording pulse controlling method for an optical disc according to the present invention will be described. Figure 16 shows an example of a recording and reproduction apparatus according to the present invention. Laser light emitted from an optical head 1 to an optical disc 2 converts information on a medium into a reproduction signal by reflection. The reproduction signal has its waveform shaped by a waveform equalizer 3. The reproduction signal having the shaped waveform is quantized by an A/D converter 4 based on reproduction clock. The quantized reproduction signal passes through a high-pass filter 5 and a low frequency component is removed therefrom. A phase comparator 6 detects phase error information from an output of the high-pass filter 5. An LPF 7 detects a frequency component to follow from the detected phase error. An output from the LPF 7 is converted into an analog signal by a D/A converter 8. A VCO 9 is controlled by the converted analog signal and generates the reproduction clock. The phase of the reproduction clock is subjected to feedback control such that the average of the phase error detected at the phase comparator 6 becomes zero. The A/D converter 4, the high-pass filter 5, the phase comparator 6, the LPF 7, the D/A converter 8, and the VCO 9 described above form a PLL circuit for generating the reproduction clock.

A digitalizing circuit 10 discriminates original digital information from an output from the high-pass filter 5. A pattern detection circuit 11 identifies a pattern formed of combinations of marks and spaces having predetermined lengths from the digitalized data which has been discriminated. An edge shift detection circuit 12 cumulatively adds phase error information included in the marks and spaces of predetermined lengths detected by the pattern detection circuit 11 for each pattern, and calculates a shift from an optimal value of the recording pulse parameter (edge shift). The edge shift detection as described above with reference to Figure 4 is performed. The digitalizing circuit 10, the pattern detection circuit 11, and the edge shift detection circuit 12 form an edge detection circuit for detecting the edge shift amount. The PLL circuit (formed of the A/D converter 4, the high-pass filter 5, the phase comparator 6, the LPF 7, the D/A converter 8, and the VCO 9) and the edge detection circuit (formed of the digitalizing circuit 10, the pattern detection circuit 11, and the edge shift detection circuit 12) form an error detection circuit for detecting an error between a recording mark formed on the optical disc 2 and a predetermined reference value (error detection unit).

An optical disc controller 13 changes the recording pulse parameter for which change is judged to be required based on the edge shift amount for each pattern. A method for changing the recording pulse parameters is described above, so it is not described here. A pattern generation circuit 14 outputs a pattern for learning recording compensation for trial recording. A recording compensation circuit 15 produces a laser emission waveform in accordance with a recording compensation learning pattern based on the recording pulse parameters from the optical disc controller 13. The optical disc controller 13 and the recording compensation circuit 15 above form a recording pulse control circuit for adjusting recording pulses for recording data on the optical disc 2 based on the error detected by the above error detection circuit (recording pulse controlling unit). A laser drive circuit 16 drives a laser of the optical head 1 in accordance with the produced laser emission pattern.

### (Others)

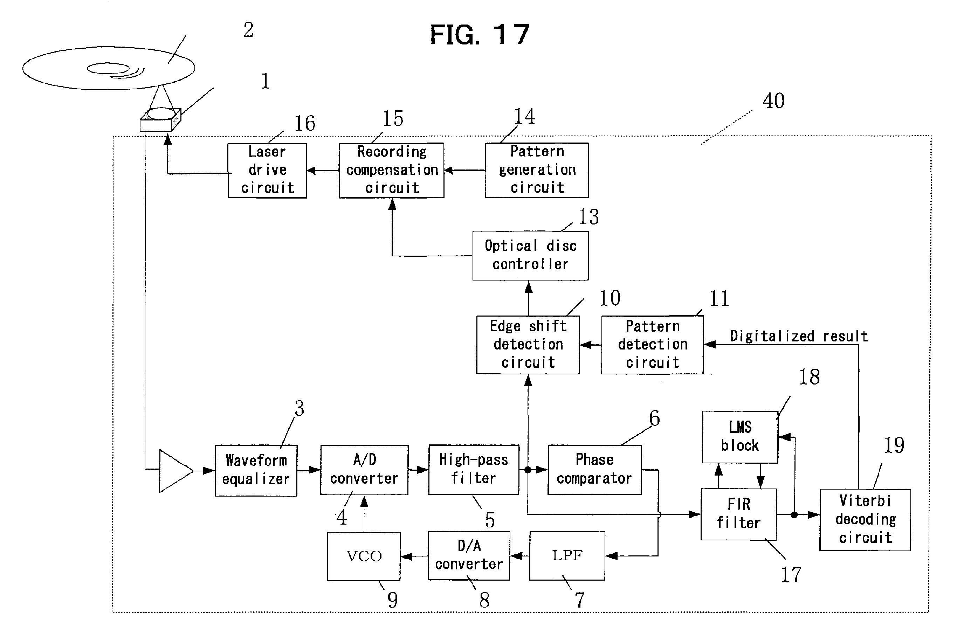

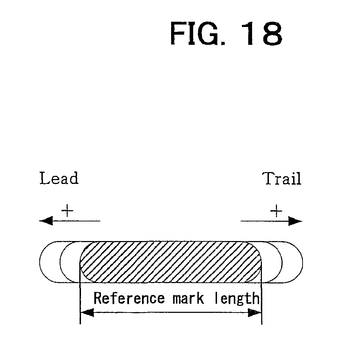

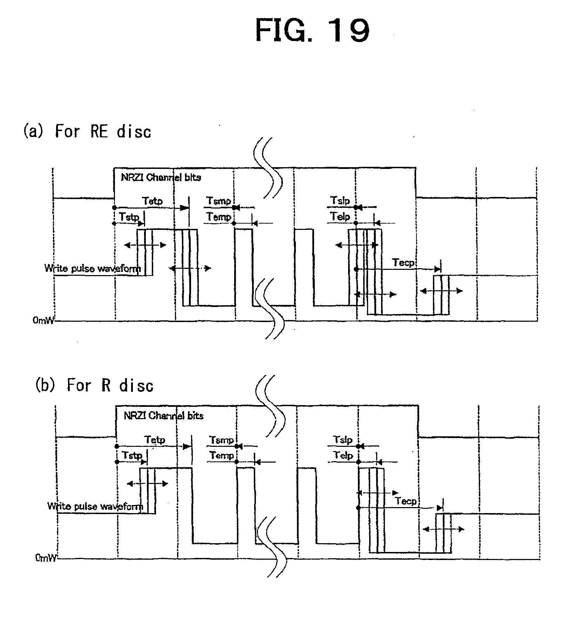

<1> In a recording and reproduction apparatus of the present invention as shown in Figure 16, an output from the high-pass filter 5 is digitalized by the digitalizing circuit 10, and a pattern is detected from the digitalized result. However, the present invention is not limited to this. A recording and reproduction apparatus may be formed and a pattern may be detected as shown in Figure 17. Specifically, an output from the high-pass filter 5 is input to an FIR filter 17. To obtain an equalization error from an output from the FIR filter 17, adaptive equalization is performed by an LMS block 18 for updating a tap coefficient of the FIR filter 17. Also, a Viterbi decoding circuit 19 for estimating the most likely status transition from the output of the FIR filter 17 outputs a digitalized result. Based on the digitalized result of the Viterbi decoding circuit 19, the pattern detection circuit 11 detects a pattern. In a structure where a pattern is detected as such and the edge shift amounts are obtained, more likely digitalized result is used, so that more accurate edge shift amount can be obtained.
<2> In the above embodiment, the mark length is adjusted first, and then the mark position is adjusted in the recording pulse adjustment procedure. However, the mark length may be adjusted after the position of the mark is adjusted.
<3> In the above embodiment, the mark length is adjusted first, and then the mark position is adjusted in the recording pulse adjustment procedure. However, the mark length and the mark position may be adjusted at the same time.
<4> In the recording pulse controlling in the above embodiment, the parameters of the recording pulse conditions are the first pulse width, the first pulse position, the multi-pulse width, and the cooling pulse width which correspond to the mark length of the original signal to be recorded. However, the present invention is not limited to this. The present invention can be applied to a controlling method of the recording pulse having other shapes.
<5> In the above embodiment, the recording pulse standard conditions which have been previously recorded in a specific area on the disc are read and the recording pulse conditions are adjusted based on the recording pulse standard conditions. In identical combinations of the discs and the recording and reproduction apparatuses, recording pulse conditions may be determined first and stored in a specific areas on the discs, and then new recording pulse conditions may be adjusted based on that recording pulse conditions using the recording pulse controlling method as described above. In identical combinations of the discs and the recording and reproduction apparatuses, the recording pulse conditions do not change largely. Thus, optimal recording pulse conditions can be determined with slight adjustment, or without substantial adjustment. This can reduce time for adjustment. Recording of the shortest mark length is relatively susceptible to change in environment, such as temperature and humidity. Thus, it may be also possible to employ the recording pulse controlling method as described in the above embodiment only for adjusting the shortest mark length.
<6> In the above embodiment, the edge shift amounts are obtained as specific parameters for reproduction and the recording pulse conditions are determined such that the result of the predetermined calculation using the edge shift amounts has a minimum value. However, the present invention is not limited to this, and another calculation method may be used.
<7> In the above embodiment, the edge shift amounts are used as specific parameters for reproduction. However, the present invention is not limited to this. For example, a reproduction signal evaluation indicator of a partial response maximum likelihood (PRML) method as described in Patent Document 3 may be used as a specific parameter for reproduction.
<8> A recording pulse adjustment method as described in the above embodiment may be used mainly for a rewritable disc (RE disc). A different controlling method may be used for a write-once disc (R disc).
   The RE disc can be recorded repeatedly, which requires that new information (data) can be overwritten in an area which already stores information. Thus, it is significantly important to maintain an overwrite property (a property of recording quality by overwriting). For maintaining the overwrite property, it is most important to keep recording power irradiating a disc surface during recording constant. However, it is also important to adjust shapes of the recording pulses. For adjustment which influences the shapes of the recording pulses, it is desirable that the positions of the pulses are changed with the widths of the recording pulses being kept constant in order to maintain the overwrite property.
   On the other hand, it is not necessary to consider the overwrite property for R discs, and the recording mark to be formed is susceptible (sensitive) to the shapes of the recording pulses. Thus, adjustment with the width of the recording pulse being changed is desirable.
   For example, there is a step of adjusting a length and a position of a recording mark to be formed by changing a start (Lead) position and terminal (Trail) position of the recording mark as shown in Figure 18.
   For an RE disc, in adjustment involving a change in the length of the recording mark as shown in Figure 18, or in a step for adjusting the Lead position and the Trail position, adjustment is performed with the widths of the recording pulses being kept constant as shown in Figure 19(a). Specifically, for changing the Lead position, a Tstp parameter and a Tetp parameter which are related to a rising position and a falling position of a first pulse are changed in the same direction by the same amount. In this way, the position of the first pulse is changed without changing the width of the first pulse, and the Lead position is adjusted. Similarly, for changing the Trail position, a Tslp parameter and a Tetp parameter which are related to a rising position and a falling position of a last pulse, and a Tecp parameter which defines a cooling pulse width are changed in the same direction by the same amount. In this way, the Trail position is adjusted with the width of the last pulse and the width of the cooling pulse being kept constant. As described above, an RE disc has its overwrite property maintained by adjusting the position of the recording pulse without changing the width of the recording pulse.
   On the other hand, for an R disc, in adjustment involving a change in the length of the recording mark as shown in Figure 18, or in a step for adjusting the Lead position and the Trail position, adjustment is performed with the widths of the recording pulses being changed as shown in Figure 19(b). Specifically, for changing the Lead position, only the Tstp parameter which is related to the rising position of the first pulse is changed. In this way, the width of the first pulse is changed, and the Lead position is adjusted. Similarly, for changing the Trail position, only the Telp parameter, which is the parameter related to the falling position of the last pulse, is changed. In this way, the width of the last pulse is changed, and the Trail position is adjusted. For adjusting the Trail position, the Telp parameter which is the parameter related to the falling position of the last pulse and the Tecp parameter which is the parameter which defines the cooling pulse width may be changed in the same direction by the same amount, thereby adjusting the Trail position with the cooling pulse width being kept constant.
   In this example, the parameters to be adjusted are the parameters representing the positions of respective pulses. However, the technical idea described above is applicable to other examples where the parameters to be adjusted are the parameters representing the positions and the widths of the pulses as described in the above embodiment.
   Switching of the controlling methods depending upon the discs as described above can be realized with the optical disc controller 13 in the recording and reproduction apparatus shown in Figure 16. Specifically, the optical disc controller 13 obtains discrimination information for discriminating the disc which has been previously recorded on a control track or in another area of the optical disc 2, and switches between the methods for adjusting the recording pulses for an RE disc and an R disc. When it is determined that the RE disc is used, the optical disc controller 13 adjusts the recording pulses by the method for RE discs as described in this section or the method described in the present embodiment. If it is determined that an R disc is used, the optical disc controller 13 adjusts the recording pulses by the method for R discs as described in this section.
   As described above, recording according to the differences in the properties of the RE discs and the R discs becomes possible, and more appropriate recording can be performed.
<9> The apparatus described with reference to the embodiments may be realized with integrated circuits and the like. Specifically, in the recording and reproduction apparatuses described in the above embodiments with reference to Figures 16 and 17, blocks may be respectively formed into one chip by a semiconductor device such as LSIs. Alternatively, some or all of the blocks may be formed into one chip.
   Specifically, the optical disc controller 13 and the recording compensation circuit 15 may be formed into one chip. Alternatively, the structure indicated by reference numeral 40 in Figures 16 and 17, in other words, the structure including all the components except for the optical head 1 and the optical disc 2 may be formed into one chip as a semiconductor device. Alternatively, the structure indicated by reference numeral 40 with the laser drive circuit 16 being removed may be formed into one chip as a semiconductor device. The structure produced as a semiconductor device, for example, the structure indicated by reference numeral 40 may be mounted as a semiconductor device, or may be realized by cooperation of storage devices such as ROM, RAM and the like with an arithmetic unit such as a CPU. In such a case, ROM previously stores a program for adjusting recording pulses to be carried out by the structure indicated by reference numeral 40, and a CPU runs the program stored in the ROM. RAM reads a program for adjusting the recording pulses to be carried out by the structure indicated by reference numeral 40, and a CPU runs the program read by the RAM.
   Herein, an LSI is used as an example. However, the device may be called IC, system LSI, super LSI, or ultra LSI, depending upon its integration degree.
   Moreover, a method for integration is not limited to LSI. Integrated circuit may be realized using specific-purpose circuits or commonly-used processors. After fabrication of LSI, a field programmable gate array (FPGA) which can be programmed, or a reconfigurable processor which allows reconfiguration of connection and setting of circuit cells within the LSI may be used.
   With the advent of new technique for integrating circuits which may replace LSI caused by an advance in semiconductor technology or another technology developed therefrom, functional blocks may be integrated using such a technique. Application of biotechnology and the like is possible.
<10> The present invention may be as follows.
   The optical disc recording pulse controlling method and recording pulse controlling device according to the present invention are a recording pulse controlling method and a recording pulse controlling device for reading out recording pulse standard conditions from a writable optical disc which previously stores the recording pulse standard conditions which specify information on recording pulses for each of a plurality of combinations of mark lengths and space lengths, and adjusting the recording pulse standard conditions to obtain recording pulse conditions. In the method and device, the recording pulse conditions are a first pulse width, a first pulse position, a multi-pulse width and a cooling pulse width corresponding to a mark length of an original signal to be recorded, the first pulse width and the multi-pulse width are the recording pulse standard conditions, steps of trial recording and reproducing the trial recording are performed at least once, and conditions of the first pulse position and the cooling pulse width are determined such that specific parameters for reproduction have desired values respectively.
   The method and the device further include: a step of adjusting the mark length by changing the first pulse position or the cooling pulse width ; and a step of adjusting the position of the mark by changing the first pulse position and the cooling pulse width at the same time in the same direction.
   Further, the recording pulse controlling is applied to mark lengths except for the shortest mark length of the original signal to be recorded.
   In the recording pulse controlling method and the recording pulse controlling device for reading out recording pulse standard conditions from a writable optical disc which previously stores the recording pulse standard conditions which specify information on recording pulses for each of a plurality of combinations of mark lengths and space lengths, and adjusting the recording pulse standard conditions to obtain recording pulse conditions, the recording pulse conditions are a first pulse width, a first pulse position, and a cooling pulse width corresponding to a mark length of an original signal to be recorded, and steps of trial recording and reproducing the trial recording are performed at least once. The method and device further includes a step of mark length adjustment by changing the first pulse width or mark length adjustment by changing the cooling pulse width, and a step of adjusting the position of the mark by changing the first pulse position and the cooling pulse width at the same time in the same direction, so that the recording pulse conditions are determined such that specific parameters for reproduction have desired values respectively.
   The recording pulse controlling is applied to the shortest mark length of the original signal to be recorded.
   In the recording pulse controlling method and the recording pulse controlling device for reading out recording pulse standard conditions from a writable optical disc which previously stores the recording pulse standard conditions which specify information on the recording pulses for each of a plurality of combinations of mark lengths and space lengths, and adjusting the recording pulse standard conditions to obtain recording pulse conditions, the recording pulse conditions are a first pulse width, a first pulse position, a multi-pulse width, and a cooling pulse width corresponding to a mark length of an original signal to be recorded, and steps of trial recording and reproducing the trial recording are performed at least once. Further, in the method and device, the recording pulse conditions to be changed are varied in accordance with the mark length of the original signal to be recorded, the mark length and the mark position are adjusted for each of the mark lengths, and recording pulse conditions are determined for each of the mark lengths such that specific parameters for reproduction have desired values respectively.
   An amount of adjustment of the mark length by changing the cooling pulse width with respect to the recording pulse standard conditions is smaller than that of the mark length by changing the first pulse position.
   The specific parameters for reproduction are edge shift amounts at rising and falling of the mark which are obtained when the formed mark is reproduced.
   For each of the plurality of combinations of the mark lengths and the space lengths, a rising edge shift amount and a falling edge shift amount of the formed mark are obtained. For adjusting the mark length, the recording pulse condition in which an added value of the rising edge shift amount and the falling edge shift amount is the smallest is set to be a determined recording pulse condition. For adjusting the mark position, the recording pulse condition in which an added value of the absolute value of the rising edge shift amount and the absolute value of the falling edge shift amount is the smallest is set to be the determined recording pulse condition.
<11> A recording compensation learning pattern generated by the pattern generation circuit 14 may be as follows. For example, a recording pattern for adjusting the recording pulses is not necessarily a pattern of user data. More specifically, for example, when user data is used for adjusting a 2T mark, a rate that 2T marks are generated is high. Therefore, a threshold value of a comparator obtained from a reproduced waveform of a recording pattern (see Figure 4), i.e., a reference level, is changed when 2T marks are changed. The change in the reference level makes it impossible to have the mark lengths and the mark positions detected appropriately.
   Thus, a recording pattern with the reference level less likely to be changed is preferable as the recording pattern for adjusting the recording pulses. For example, it is preferable to use a pattern which includes all the mark lengths generated based on modulation and demodulation rules from the shortest to the longest (for example, from 2T to 9T), and in which the mark lengths are generated at substantially the same rate. In such a pattern, when the mark length or the mark position of a certain recording mark is changed, its influence on all the edges (2T through 9T) is only 1/16. Even if it is determined that the reference level is a level which is a center of all edges, there is substantially no influence on the reference level, and the mark length and the mark position can be detected appropriately.
<12> Adjustment of the recording marks may be performed in a procedure which can suppress an influence of the waveform on a threshold (reference level). For example, if mark lengths of a plurality of recording marks (for example, 2T and 3T) are to be adjusted at the same time in one recording pattern, parameters are adjusted for the 2T mark such that they become longer and parameters are adjusted for the 3T mark such that they become shorter. In this way, the center of all the edges of the waveform or the center of total energy of the waveform does not change substantially, and there is substantially no influence caused by the adjustment of the recording marks on the reference level. Thus, the mark lengths and the mark positions can be detected appropriately. Similarly, for adjusting the mark positions, it is preferable to adjust with a procedure which can suppress the influence of the waveform on the threshold. Specifically, for adjusting mark lengths of a plurality of recording marks (for example, 2T and 3T) at the same time, the 2T mark and the 3T mark are adjusted so as to travel in reverse phase, i.e., to move in reverse directions (time advancing direction and time delay direction).

### INDUSTRIAL APPLICABILITY

According to the optical disc recording pulse controlling method, the optical disc recording pulse controlling device and the optical disc apparatus of the present invention, in a recording pulse condition adjustment method for optical discs for reading out recording pulse standard conditions from a writable optical disc which previously stores the recording pulse standard conditions in a specific area, and setting recording pulse conditions of a recording and reproduction apparatus to record and reproduce data, an influence of variance in properties of the writable optical disc and the recording and reproduction apparatus is reduced and appropriate recording pulse adjustment control is achieved. Thus, the condition of recording is improved and errors in reproduction are decreased.

Accordingly, yields in the mass production of the optical discs and the recording and reproduction apparatuses are improved, and improvement in quality of products and cost reduction can also be achieved.

## Claims

1. A recording pulse controlling method for adjusting recording pulses for recording information on a writable optical disc, comprising:
a first step for adjusting a parameter related to adjustment of a recording mark length (hereinafter, referred to as a recording mark length adjustment parameter) among recording pulse parameters, in which the recording mark length adjustment parameter is adjusted to have a value for forming a recording mark having a length closest to a predetermined recording mark length ; and
a second step for adjusting a parameter related to adjustment of a recording mark position (hereinafter, referred to as a recording mark position adjustment parameter) among the recording pulse parameters after the first step, in which the recording mark position adjustment parameter is adjusted to have a value for forming the recording mark at a position closest to a predetermined recording mark position.

2. The recording pulse controlling method according to claim 1, wherein:
the first step includes a first sub-step for adjusting a parameter related to adjustment of a front end position of a recording mark (hereinafter, referred to as a front end position adjustment parameter) among the recording mark length adjustment parameters; and
the first sub-step is a step of adjusting the front end position adjustment parameter to have a value for forming the recording mark having a length closest to the predetermined recording mark length.

3. The recording pulse controlling method according to claim 2, wherein:
the first step further includes a second sub-step for adjusting a parameter related to adjustment of a rear end position of a recording mark (hereinafter, referred to as a rear end position adjustment parameter) among the recording mark length adjustment parameters; and
the second sub-step is a step of adjusting the rear end position adjustment parameter to have a value for forming the recording mark having a length closest to the predetermined recording mark length after the first sub-step.

4. The recording pulse controlling method, according to claim 1, wherein the first step includes a third sub-step for adjusting a parameter related to adjustment of a front end position of a recording mark (hereinafter, referred to as a front end position adjustment parameter) and a parameter related to adjustment of a rear end position of the recording mark (hereinafter, referred to as a rear end position adjustment parameter) among the recording mark length adjustment parameters.

5. The recording pulse controlling method according to claim 4, wherein the first step further includes a fourth sub-step for adjusting either of the front end position adjustment parameter or the rear end position adjustment parameter that has less influence on a recording mark length of the recording mark to be formed after the third sub-step.

6. The recording pulse controlling method according to claim 2, wherein the front end position adjustment parameter includes a parameter for adjusting a position of a first pulse of the recording pulses.

7. The recording pulse controlling method according to claim 6, wherein the predetermined recording mark length is one of recording mark lengths used for recording except for a shortest recording mark length.

8. The recording pulse controlling method according to claim 2, wherein the front end position adjustment parameter includes at least a parameter for adjusting a width of a first pulse of the recording pulses.

9. The recording pulse controlling method according to claim 8, wherein the predetermined recording mark length is a shortest recording mark length of recording mark lengths used for recording.

10. The recording pulse controlling method according to claim 3, wherein the rear end position adjustment parameter includes a parameter for adjusting a width of a cooling pulse of the recording pulses.

11. The recording pulse controlling method according to claim 3, wherein the rear end position adjustment parameter includes a parameter for adjusting a width of a last pulse of the recording pulses.

12. The recording pulse controlling method according to claim 11, wherein the predetermined recording mark length is one of recording mark lengths used for recording except for a shortest recording mark length.

13. The recording pulse controlling method according to claim 1, wherein the second step is a step of adjusting a pulse position of a predetermined pulse among the recording pulses with a pulse width thereof being maintained.

14. The recording pulse controlling method according to claim 13, wherein:
the predetermined pulse includes at least one of a first pulse, a multi-pulse, a last pulse, and a cooling pulse; and
the second step is a step for adjusting the recording mark position adjustment parameter such that the pulse positions of the predetermined pulses are changed in the same direction by the same amount respectively.

15. A recording pulse controlling method for adjusting recording pulses for recording information on a writable optical disc, comprising:
a step of adjusting a parameter related to adjustment of a recording mark length (hereinafter, referred to as a recording mark length adjustment parameter) among recording pulse parameters ; and
a step of adjusting a parameter related to adjustment of a recording mark position (hereinafter, referred to as a recording mark position adjustment parameter) among the recording pulse parameters, wherein
for adjusting the recording mark length adjustment parameter or the recording mark position adjustment parameter, a pulse position of a predetermined pulse among the recording pulses is adjusted with a pulse width thereof being maintained.

16. The recording pulse controlling method according to claim 15, wherein the predetermined pulse includes any one of a first pulse, a multi-pulse, a last pulse, and a cooling pulse of the recording pulses.

17. The recording pulse controlling method according to claim 15 or 16, wherein the writable optical disc is a rewritable optical disc.

18. The recording pulse controlling method according to claim 15, wherein, when the writable optical disc is a write-once read-many optical disc, the pulse width of the predetermined pulse among the recording pulses is adjusted for adjusting the recording mark length adjustment parameter or the recording mark position adjustment parameter.

19. A recording pulse controlling device for adjusting recording pulses for recording information on a writable optical disc, comprising:
a parameter adjustment section for adjusting a recording pulse parameter; and
a recording pulse adjustment section for adjusting the recording pulse in accordance with the recording pulse parameter adjusted by the parameter adjustment section, wherein
the parameter adjustment section adjusts a parameter related to adjustment of a recording mark length (hereinafter, referred to as a recording mark length adjustment parameter) among the recording pulse parameters, and then adjusts a parameter related to adjustment of a recording mark position (hereinafter, referred to as a recording mark position adjustment parameter),
for adjusting the recording mark length adjustment parameter, the recording mark length adjustment parameter is adjusted to have a value for forming a recording mark having a length closest to a predetermined recording mark length among recording marks recorded with the recording mark length adjustment parameter being varied, and
for adjusting the recording mark position adjustment parameter, the recording mark position adjustment parameter is adjusted to have a value for forming a recording mark at a position closest to a predetermined recording mark position among recording marks recorded with the recording mark position adjustment parameter being varied.

20. The recording pulse controlling device according to claim 19, wherein, for adjusting the recording mark length adjustment parameter, a parameter related to adjustment of a front end position of a recording mark (hereinafter, referred to as a front end position adjustment parameter) among the recording mark length adjustment parameters is adjusted to have a value for forming a recording mark having a length closest to the predetermined recording mark length among the recording marks recorded with the front end position adjustment parameter being varied.

21. The recording pulse controlling device according to claim 20, wherein, for adjusting the recording mark length adjustment parameter, a parameter related to adjustment of a rear end position of a recording mark (hereinafter, referred to as a rear end position adjustment parameter) among the recording mark length adjustment parameters is adjusted to have a value for forming a recording mark having a length closest to the predetermined recording mark length among the recording marks recorded with the rear end position adjustment parameter being varied after the adjustment of the front end position adjustment parameter.

22. The recording pulse controlling device according to claim 19, wherein, for adjusting the recording mark length adjustment parameter, a parameter related to adjustment of a front end position of a recording mark (hereinafter, referred to as a front end position adjustment parameter) and a parameter related to adjustment of a rear end position of a recording mark (hereinafter, referred to as a rear end position adjustment parameter) among the recording mark length adjustment parameters are adjusted.

23. The recording pulse controlling device according to claim 22, wherein, for adjusting the recording mark length adjustment parameter, either of the front end position adjustment parameter or the rear end position adjustment parameter that has less influence on a recording mark length of a recording mark to be formed is further adjusted after changes in the front end position adjustment parameter and the rear end position adjustment parameter.

24. The recording pulse controlling device according to claim 20, wherein the front end position adjustment parameter includes a parameter for adjusting a position of a first pulse of the recording pulses.

25. The recording pulse controlling device according to claim 24, wherein the predetermined recording mark length is one of recording mark lengths used for recording except for a shortest recording mark length.

26. The recording pulse controlling device according to claim 20, wherein the front end position adjustment parameter includes at least a parameter for adjusting a width of a first pulse of the recording pulses.

27. The recording pulse controlling device according to claim 26, wherein the predetermined recording mark length is a shortest recording mark length of recording mark lengths used for recording.

28. The recording pulse controlling device according to claim 21, wherein the rear end position adjustment parameter includes a parameter for adjusting a width of a cooling pulse of the recording pulses.

29. The recording pulse controlling device according to claim 21, wherein the rear end position adjustment parameter includes a parameter for adjusting a width of a last pulse of the recording pulses.

30. The recording pulse controlling device according to claim 29, wherein the predetermined recording mark length is one of recording mark lengths used for recording except for a shortest recording mark length.

31. The recording pulse controlling device according to claim 19, wherein, for adjusting the recording mark position adjustment parameter, a pulse position of a predetermined pulse among the recording pulses is adjusted with a pulse width thereof being maintained.

32. The recording pulse controlling device according to claim 31, wherein:
the predetermined pulse includes at least one of a first pulse, a multi-pulse, a last pulse, and a cooling pulse ; and
for adjusting the recording mark position adjustment parameter, the recording mark position adjustment parameter is adjusted such that the pulse positions of the predetermined pulses are changed in the same direction by the same amount respectively.

33. A recording pulse controlling device for adjusting recording pulses for recording information on a writable optical disc, comprising:
a parameter adjustment section for adjusting a recording pulse parameter; and
a recording pulse adjustment section for adjusting the recording pulse in accordance with the recording pulse parameter adjusted by the parameter adjustment section, wherein
the parameter adjustment section adjusts a parameter related to adjustment of a recording mark length (hereinafter, referred to as a recording mark length adjustment parameter), and a parameter related to adjustment of a recording mark position (hereinafter, referred to as a recording mark position adjustment parameter) among the recording pulse parameters, and
for adjusting the recording mark length adjustment parameter or the recording mark position adjustment parameter, a pulse position of a predetermined pulse among the recording pulses is adjusted with a pulse width thereof being maintained.

34. The recording pulse controlling device according to claim 33, wherein the predetermined pulse includes any one of a first pulse, a multi-pulse, a last pulse, and a cooling pulse of the recording pulses.

35. The recording pulse controlling device according to claim 33 or 34, wherein the writable optical disc is a rewritable optical disc.

36. The recording pulse controlling device according to claim 33, wherein, when the writable optical disc is a write-once read-many optical disc, the pulse width of the predetermined pulse among the recording pulses is adjusted for adjusting the recording mark length adjustment parameter or the recording mark position adjustment parameter.

37. An optical disc apparatus, comprising:
an optical head for irradiating an optical disc with laser, receiving reflected light and converting the light into a reproduction signal;
an error detection unit for obtaining the reproduction signal and detecting an error between a recording mark formed on the optical disc and a recording mark which serves as a reference; and
a recording pulse controlling unit for adjusting recording pulses for recording information on the optical disc based on the error detected by the error detection unit,
wherein the recording pulse controlling unit includes:
a parameter adjustment section for adjusting a recording pulse parameter ; and
a recording pulse adjustment section for adjusting the recording pulse in accordance with the recording pulse parameter adjusted by the parameter adjustment section, in which
the parameter adjustment section adjusts a parameter related to adjustment of a recording mark length (hereinafter, referred to as a recording mark length adjustment parameter) among the recording pulse parameters, and then adjusts a parameter related to a recording mark position (hereinafter, referred to as a recording mark position adjustment parameter),
for adjusting the recording mark length adjustment parameter, the recording mark length adjustment parameter is adjusted to have a value for forming a recording mark having a smallest error with respect to a predetermined recording mark length among recording marks recorded with the recording mark length adjustment parameter being varied, and
for adjusting the recording mark position adjustment parameter, the recording mark position adjustment parameter is adjusted to have a value for forming a recording mark having a smallest error with respect to a predetermined recording mark position among recording marks recorded with the recording mark position adjustment parameter being varied.

38. An optical disc apparatus, comprising:
an optical head for irradiating an optical disc with laser, receiving reflected light and converting the light into a reproduction signal ;
an error detection unit for obtaining the reproduction signal and detecting an error between a recording mark formed on the optical disc and a recording mark which serves as a reference ; and
a recording pulse controlling unit for adjusting recording pulses for recording information on the optical disc based on the error detected by the error detection unit,
wherein the recording pulse controlling unit includes:
a parameter adjustment section for adjusting a recording pulse parameter; and
a recording pulse adjustment section for adjusting the recording pulse in accordance with the recording pulse parameter adjusted by the parameter adjustment section, wherein
the parameter adjustment section adjusts a parameter related to adjustment of a recording mark length (hereinafter, referred to as a recording mark length adjustment parameter), and a parameter related to adjustment of a recording mark position (hereinafter, referred to as a recording mark position adjustment parameter) among the recording pulse parameters, and
for adjusting the recording mark length adjustment parameter or the recording mark position adjustment parameter, a pulse position of a predetermined pulse among the recording pulses is adjusted with a pulse width thereof being maintained.

39. The optical disc apparatus according to claim 37 or 38, wherein the error detection unit detects the error using a level which is a center of all edges of a waveform when the recording mark formed on the optical disc is reproduced.

40. The optical disc apparatus according to claim 37 or 38, wherein the error detection unit detects the error using a level which is a center of total energy of a waveform when a recording mark formed on the optical disc is reproduced.

41. The optical disc apparatus according to claim 37 or 38, further comprising:
a recording pattern generation circuit for outputting to the recording pulse controlling unit a predetermined recording pattern including a recording mark to be adjusted at the recording pulse controlling unit, wherein
the predetermined recording pattern includes recording marks having various lengths and spaces having various lengths at substantially the same ratio respectively.

42. The optical disc apparatus according to claim 37 or 38, wherein the recording pulse controlling unit adjusts the recording mark length adjustment parameter and the recording mark position adjustment parameter with a level to be a center of all edges of a waveform or a level to be a center of total energy of a waveform when the recording mark formed on the optical disc is reproduced being kept substantially constant.

43. The optical disc apparatus according to claim 42, wherein, for adjusting the recording mark length adjustment parameters corresponding to various recording marks, the recording pulse controlling unit performs trial recording with the recording mark length adjustment parameters corresponding to a part of the recording marks being adjusted such that the part of the recording marks become longer and adjusts recording mark lengths of the part of the recording marks, and also performs trial recording with the recording mark length adjustment parameters corresponding to other recording marks being adjusted such that the other recording marks become shorter and adjusts the recording mark lengths of the other recording marks.

44. The optical disc apparatus according to claim 42, wherein, for adjusting the recording mark position adjustment parameters corresponding to various recording marks, the recording pulse controlling unit performs trial recording with the recording mark position adjustment parameters being adjusted such that the various recording marks move in reverse directions respectively, and adjusts the recording mark positions of the various recording marks respectively.
